(19) Europäisches Patentamt
European Patent Office
Office européen des brevets

(11) **EP 4 554 109 A1**

(12) **EUROPEAN PATENT APPLICATION**

(43) Date of publication:
14.05.2025 Bulletin 2025/20

(21) Application number: 24212329.7

(22) Date of filing: 12.11.2024

(51) International Patent Classification (IPC):
*H04B 7/06* (2006.01)

(52) Cooperative Patent Classification (CPC):
H04B 7/06952; H04B 7/063; H04B 7/0632;
H04B 7/06964

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.11.2023 US 202363548337 P
26.03.2024 US 202463570019 P
25.09.2024 US 202463699039 P
29.10.2024 US 202418930719

(71) Applicant: Samsung Electronics Co., Ltd.
Suwon-si, Gyeonggi-do 16677 (KR)

(72) Inventors:
• AWADIN, Mohamed
San Jose, CA, 95134 (US)
• SHAHMOHAMMADIAN, Hoda
San Jose, CA, 95134 (US)
• CHENG, Yuan-Sheng
San Jose, CA, 95134 (US)
• HU, Liang
San Jose, CA, 95134 (US)
• BAE, Jung Hyun
San Jose, CA, 95134 (US)
• SABER, Hamid
San Jose, CA, 95134 (US)

(74) Representative: Kuhnen & Wacker
Patent- und Rechtsanwaltsbüro PartG mbB
Prinz-Ludwig-Straße 40A
85354 Freising (DE)

(54) **SYSTEMS AND METHODS FOR USER EQUIPMENT (UE) INITIATED BEAM MANAGEMENT**

(57) A system and a method are disclosed for performing a UE-initiated beam-management procedure, the method includes receiving, by a user equipment, UE, configuration information including reporting data, for the UE to report information about a quality of a current beam and/or a quality of a new beam, and triggering-event data, for the UE to determine that a condition is satisfied for performing a UE-initiated, UEI, beam-management, BM, procedure, and based on determining, by the UE, that the condition is satisfied, sending a beam report including information regarding the quality of the current beam and/or the quality of the new beam.

FIG. 3

3000

105 110

3001 ① UE INDICATES TO gNB ITS CAPABILITY OF SUPPORTING UE INITIATED BEAM MANAGEMENT

3002 ② gNB PROVIDES THE NECESSARY CONFIGURATIONS FOR ASSESING THE BEAM QUALITY, E.G., THE TRIGGERING CONDITIONS AND THE ASSOCIATED RSs, IF ANY, COFIGURATION TO TRANSMIT THE REPORT/INDICATION WHEN BEAMS QUALITY DETERIORATES

3003 ③ gNB TRANSMITS RSs FOR ASSESING THE BEAM QUALITY

3004 ④ UE MONITORS THE BEAMS QUALITY

3005 ⑤ WHEN BEAMS QUALITY FALLS BELOW PARTICULAR LEVEL, THE UE TRANSMITS A REQUEST TO ADDRESS THIS SITUATION

3006 ⑥ gNB TAKES THE NECESSARY ACTIONS

3007 ⑦ gNB TRANSMITS AN EXPLICIT OR IMPLICIT INDICATION OF RECEPTION OF THE UE's REQUEST

3008 ⑧ UE MONITORS gNB's RESPONSE

EP 4 554 109 A1

**Description**

**BACKGROUND**

**1. Field**

Aspects of embodiments of the present disclosure relate to wireless communications. For example, aspects of embodiments of the present disclosure relate to performing UE-initiated beam management.

**2. Description of the Related Art**

Modern communications equipment (e.g., mobile phones, vehicles, laptops, satellites, and the like), also known as user equipment (UE), may communicate with a network node (e.g., a base station, also referred to as a gNB) to receive data from a network associated with the network node and to transmit data to the network associated with the network node. The network node may transmit a plurality of beams to be selected from in communicating with the UE. As part of a beam management (BM) process, the UE may perform quality measurements on the plurality of beams to select a beam that is best for communicating with the network node.

The above information disclosed in this Background section is for enhancement of understanding of the background of the present disclosure, and, therefore, it may contain information that does not constitute prior art.

**SUMMARY**

Some beam-management procedures may result in relatively high overhead (e.g., signaling overhead) and relatively high power consumption. For example, a network node may configure multiple reference signals (RSs) corresponding to different beams, configure corresponding channel state information (CSI) reporting types, and transmit the RSs to a UE. The UE may conduct measurements on the RSs and provide a report (e.g., a CSI report) back to the network node, leading to additional power consumption at the UE side and additional overhead in terms of resources occupied by the RSs.

To overcome these issues, systems and methods are described herein for performing UE-initiated (UEI) beam management. For example, a UE may determine when a trigger event occurs and perform a UEI BM process. As part of the UEI BM process, the UE may determine a currently used beam (e.g., a current beam) and a candidate beam (e.g., a new beam) from among a plurality of beams transmitted to the UE from the network node. For some BM processes, a UE may receive a plurality of beams and report beam-quality measurements (e.g., detailed beam-quality measurements) back to the network node without regard to whether any trigger event has occurred and without regard to whether a beam-quality measurement corresponds to a current beam or a candidate beam.

Aspects of some embodiments of the present disclosure: reduce the amount of the transmitted RSs from the network node to the UE for assessing the quality of a currently used beam; reduce the amount of the transmitted reports from the UE to the network node to maintain established beams; enable faster switching between the currently used beam and a second beam when the second beam becomes a better beam for communicating with the network node than the currently used beam; provide for methods to avoid immature switching (e.g., premature switching), which may lead to problematic ping-pong effects; reduce signaling overhead of the measurement reference signals or the overhead of the reporting of a UE when the UEI BM procedures are applied.

Some embodiments of the present disclosure are directed to triggering events that may cause the UE to perform a UEI BM process.

Some embodiments of the present disclosure are directed to reporting information provided from the UE to a network node as part of the UEI BM process.

The above approaches improve on previous methods by reducing the power consumption and overhead involved in beam management through UEI beam management.

According to some embodiments of the present disclosure, a method for performing a UE-initiated beam-management procedure includes receiving, by a user equipment (UE), configuration information including beam-quality-assessment data, for the UE to determine a quality of a current beam and/or a quality of a new beam, and triggering-event data, for the UE to determine that a condition is satisfied for performing a UE-initiated (UEI) beam-management (BM) procedure, and based on determining, by the UE, that the condition is satisfied, sending a beam report.

The method may further include determining, by the UE, that a first beam is the current beam, and/or determining, by the UE, that a second beam is the new beam.

The determining that the condition is satisfied may include comparing a characteristic of the current beam with a characteristic of the new beam.

The condition may include the quality of the new beam being a threshold value better than the current beam, the threshold value being based on a reference signal received power (RSRP).

The UE may determine that the condition is satisfied by determining that a difference between a first RSRP of the current beam and a second RSRP of the new beam is less than the threshold value.

The threshold value may be configured via a higher-layer signal, the higher-layer signal complying with a radio resource control (RRC) protocol.

The condition may include the quality of the current beam being worse than a threshold value, the threshold value being determined based on a signal strength of the current beam.

The condition may include the quality of the new beam being a threshold value better than a reference signal (RS) derived from an activated transmission configuration indicator (TCI) state.

The UE may determine that a first beam is the current beam implicitly, based on an indicated transmission configuration indicator (TCI) state or based on an activated TCI state.

The current beam may be explicitly configured via a radio resource control (RRC) protocol.

The UE may determine that a second beam is the new beam implicitly, based on an activated transmission configuration indicator (TCI) state.

The new beam may be explicitly configured via a radio resource control (RRC) protocol.

The condition may include a threshold number of deterioration instances.

The threshold number of deterioration instances may be based on the deterioration instances occurring consecutively.

The threshold number of deterioration instances may be configured via a radio resource control (RRC) protocol.

The threshold number of deterioration instances may be based on the deterioration instances occurring within a time window, the time window being configured via a radio resource control (RRC) protocol.

The time window may start based on an occurrence of a first deterioration instance, and may terminate based on an expiration of a timer or based on the threshold number of deterioration instances occurring.

The threshold number of deterioration instances may be based on a beam failure recovery (BFR) procedure.

The method may further include sending, by the UE as part of a UE capability signaling procedure, information indicating that the UE is capable of supporting the UEI BM procedure.

According to other embodiments of the present disclosure, a user equipment (UE) configured to support a UE-initiated beam-management procedure includes a processing circuit, the processing circuit being configured to perform receiving configuration information including beam-quality-assessment data, for the UE to determine a quality of a current beam and/or a quality of a new beam, and triggering-event data, for the UE to determine that a condition is satisfied for performing a UE-initiated (UEI) beam-management (BM) procedure, and based on determining that the condition is satisfied, sending a beam report.

According to other embodiments of the present disclosure, a method for performing a UE-initiated beam-management procedure includes receiving, by a user equipment (UE), configuration information including reporting data, for the UE to report information about a quality of a current beam and/or a quality of a new beam, and triggering-event data, for the UE to determine that a condition is satisfied for performing a UE-initiated (UEI) beam-management (BM) procedure, and based on determining, by the UE, that the condition is satisfied, sending a beam report including information regarding the quality of the current beam and/or the quality of the new beam.

The method may further include determining, by the UE, that a first beam is the current beam, and/or determining, by the UE, that a second beam is the new beam.

The determining that the condition is satisfied may include comparing a characteristic of the current beam with a characteristic of the new beam.

The beam report may be associated with a periodic reference signal (RS) such as a synchronization signal block (SSB) or a periodic channel state information RS (P-CSI-RS).

The beam report may include a measurement of a Layer 1 reference signal received power (L1-RSRP) and a corresponding reference signal (RS) identifier.

The beam report may include an absolute reference signal received power (RSRP) for a best beam among a plurality of beams including the current beam and the new beam, the best beam having a largest measured RSRP among reported RSRP measurements associated with the plurality of beams, and one or more differential RSRP measurements for remaining beams of the plurality of beams, the remaining beams including the current beam, the one or more differential RSRP measurements being calculated based on a difference with the absolute RSRP for the best beam.

The method may further include transmitting, by the UE, a first UL channel as a schedule request (SR) to request an uplink (UL) grant for a second UL channel as a physical uplink shared channel (PUSCH) to carry the beam report, based on a deterioration in the quality of the current beam.

A network node may link the SR to the current beam or to the new beam.

The method may further include transmitting, by the UE, a first channel to notify a second channel to carry the beam report, wherein the first channel includes a physical uplink shared channel (PUCCH), and wherein the second channel includes an uplink (UL) channel.

The sending of the beam report may include carrying the beam report on a configured grant physical uplink shared channel (CG PUSCH) or a configured PUCCH based on periodic CSI reporting.

The first channel and the second channel may be separated in a time domain by a number of symbols.

An occasion of CG-PUSCH or an occasion of PUCCH may be used to send the beam report.

The beam report may include measurements of a number of reported beams from among a plurality of beams, the plurality of beams including the current beam and the new beam, the number of reported beams being configured by a radio resource control (RRC) protocol.

The beam report may include a first part having a fixed payload, and a second part having a variable payload that is determined based on the contents of the first part.

The method may further include indicating, by the UE a number of beam measurements to be included in the beam report, and one or more events out of one or more configured events to be included in the beam report.

The sending of the beam report may include treating a container carrying the beam report as an aperiodic channel state information (CSI) report carrying beam management L1-RSRP or L1-SINR for a CSI-multiplexing priority determination.

The sending of the beam report may include transmitting the beam report in a second cell that is different from a first cell in which measurements are conducted.

The beam report may occupy a same computation processing unit as a channel state information (CSI) report with a reporting quantity of "none," and the beam report may occupy the same computation processing unit for a same duration as the CSI report with the reporting quantity of "none."

The method may further include indicating, by the UE as part of a capability signaling process, a reporting quantity to be reported for UEI BM procedure.

According to other embodiments of the present disclosure, a user equipment (UE) configured to support a UE-initiated beam-management procedure includes a processing circuit, the processing circuit being configured to perform receiving, by a user equipment (UE), configuration information including reporting data, for the UE to report information about a quality of a current beam and/or a quality of a new beam, and triggering-event data, for the UE to determine that a condition is satisfied for performing a UE-initiated (UEI) beam-management (BM) procedure, and based on determining, by the UE, that the condition is satisfied, sending a beam report including information regarding the quality of the current beam and/or the quality of the new beam.

## BRIEF DESCRIPTION OF THE DRAWINGS

The above and other aspects of the present disclosure will be more clearly understood from the following detailed description of the illustrative, non-limiting embodiments with reference to the accompanying drawings.

FIG. 1 is a block diagram depicting a system for performing a UE-initiated beam-management procedure, according to some embodiments of the present disclosure.

FIG. 2 is a block diagram depicting a plurality of beams in the system for performing the UE-initiated beam-management procedure, according to some embodiments of the present disclosure.

FIG. 3 is a diagram depicting operations of a first method (hereinafter "Method 1" or a method 3000) of a general framework for UEI BM, according to some embodiments of the present disclosure.

FIG. 4 is a diagram depicting operations of a second method (hereinafter "Method 2" or a method 4000) of the general framework for UEI BM, according to some embodiments of the present disclosure.

FIG. 5 is a diagram depicting operations of a third method (hereinafter "Method 3" or a method 5000) of the general framework for UEI BM, according to some embodiments of the present disclosure.

FIG. 6 is a diagram depicting a fixed window for counting triggering instances, according to some embodiments of the present disclosure.

FIG. 7 is a diagram depicting a moving window for counting triggering instances, according to some embodiments of the present disclosure.

FIG. 8 is a diagram depicting an example of CPU occupation for periodic RS for detecting the deterioration of the currently used beam, according to some embodiments of the present disclosure.

FIG. 9 is a diagram depicting an example of CPU occupation for a PDCCH-triggering UE-initiated report for aperiodic RS, according to some embodiments of the present disclosure.

FIG. 10 is a diagram depicting an example of a UL channel to carry the potential request (e.g., the potential report), according to some embodiments of the present disclosure.

FIG. 11 is a diagram depicting the use of CFRA to transmit, from the UE to the network node, an indication that the quality of the currently used beam has degraded, according to some embodiments of the present disclosure.

FIG. 12 is a diagram depicting an example of using CFRA to transmit an indication from the UE to the network node of the preferred beam (or TCI state) when the currently used beam degrades, according to some embodiments of the present disclosure.

FIG. 13 is a diagram depicting a modification of cyclic shifts (CSs) in a PUCCH format for reporting UEI-BM information, according to some embodiments of the present disclosure.

FIG. 14 is a diagram depicting CSI report configurations for Method 2, according to some embodiments of the present disclosure.

FIG. 15 is a flow chart depicting a method for handling a collision between a container carrying a request (e.g., a report) and another UL channel (e.g., signal), according to some embodiments of the present disclosure.

FIG. 16 is a diagram depicting an example of configuring a window indicating when multiplexing PUSCH and container carrying a request (e.g., a report) from the UE is allowed, according to some embodiments of the present disclosure.

FIG. 17 is a diagram depicting an example of using CFRA, as discussed above, for indicating the preferred TCI-state, according to some embodiments of the present disclosure.

FIG. 18 is a flowchart depicting a method for performing a UE-initiated beam-management procedure, according to some embodiments of the present disclosure.

FIG. 19 is a flowchart depicting a method for performing a UE-initiated beam-management procedure, according to some embodiments of the present disclosure.

FIG. 20 is a block diagram of an electronic device in a network environment, according to some embodiments of the present disclosure.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

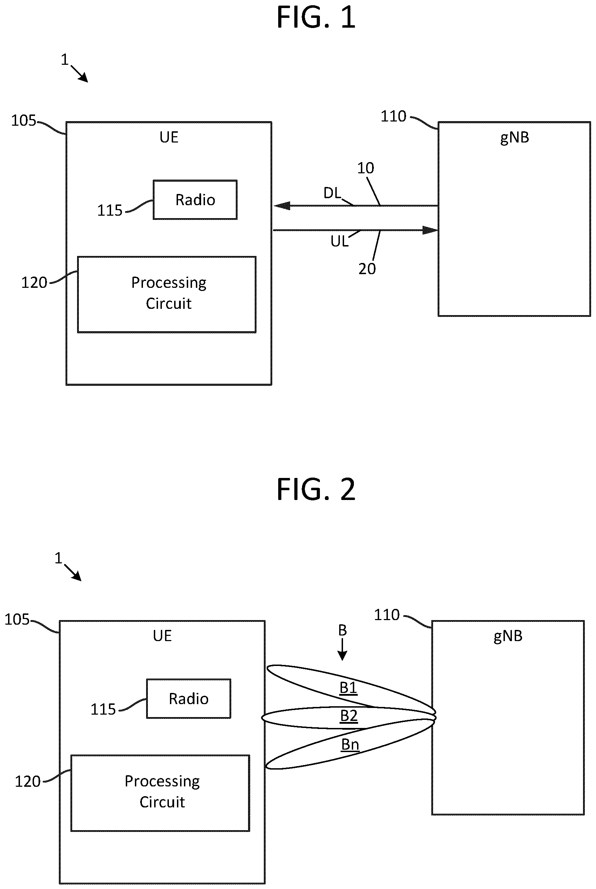

FIG. 1 is a block diagram depicting a system for performing a UE-initiated beam-management procedure, according to some embodiments of the present disclosure.

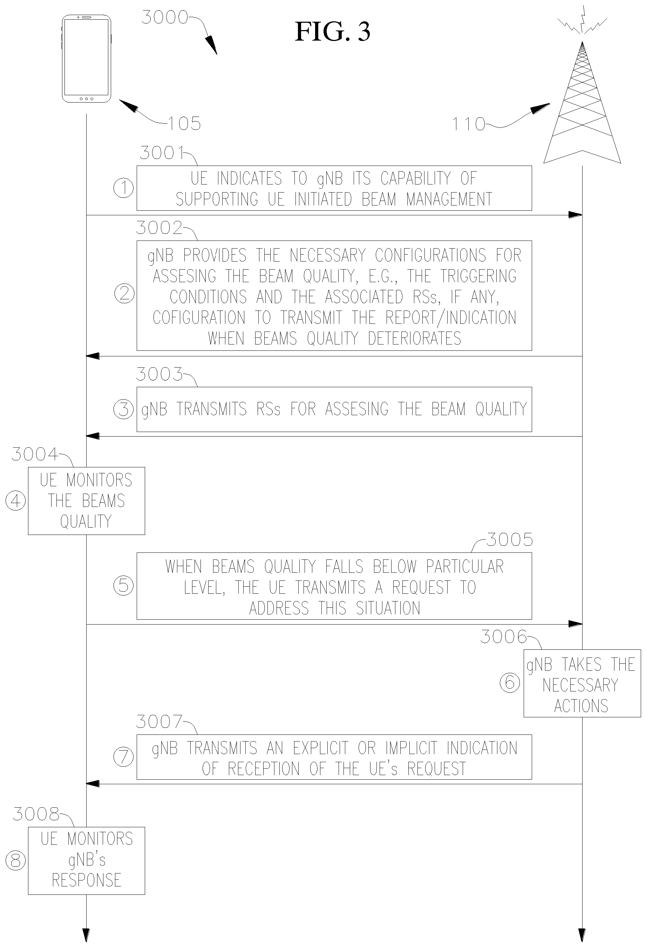

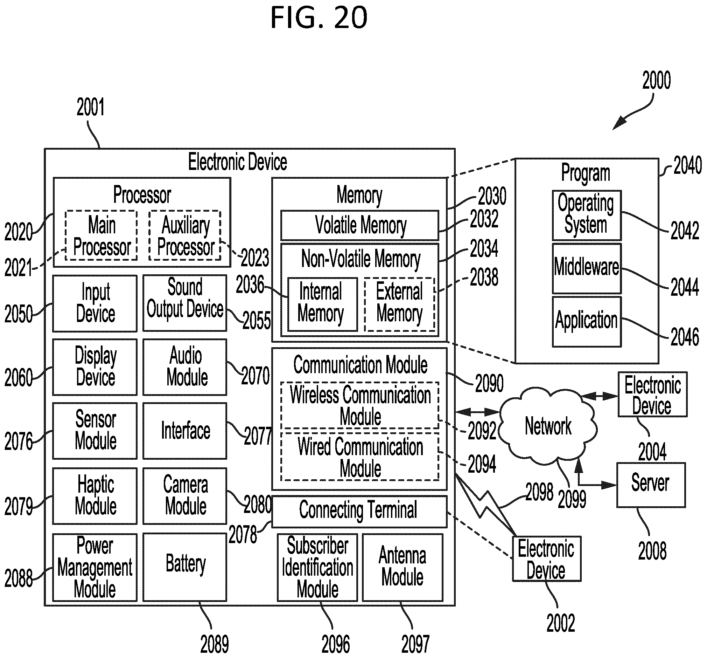

Referring to FIG. 1, the system 1 may include a UE 105 and a network node 110 (e.g., a gNodeB, also referred to as a "base station"), in communication with each other. The UE 105 may include a radio 115 and a means for processing. The means for processing may include a processing circuit 120, which may perform various methods disclosed herein (e.g., the methods depicted in FIGS. 3 through 19). The radio 115 may correspond to the communication module 2090 (see FIG. 20). The processing circuit 120 may correspond to the processor 2020 (see FIG. 20). The processing circuit 120 may receive, via the radio 115, transmissions from the network node 110, and the processing circuit 120 may transmit, via the radio 115, signals to the network node 110. A transmission from the network node 110 may be provided to the UE 105 via a downlink (DL) transmission 10. A transmission from the UE 105 may be provided to the network node 110 via an uplink (UL) transmission 20.

FIG. 2 is a block diagram depicting a plurality of beams in the system for performing the UE-initiated beam-management procedure, according to some embodiments of the present disclosure.

Referring to FIG. 2, the network node 110 may send a plurality of beams B to the UE 105. The plurality of beams B may include a first beam B1 through an n-th beam Bn. One or more beams of the plurality of beams B may be used for the DL transmissions 10 (see FIG. 1) and/or for the UL transmissions 20. In some embodiments, the UE 105 may determine a current beam from among the plurality of beams B. In some embodiments, the UE 105 may determine a new beam (e.g., a candidate beam) from among the plurality of beams B. For example, the UE 105 may perform quality measurements on one or more beams from among the plurality of beams B to determine when a triggering event has occurred. Based on determining that a triggering event has occurred, the UE 105 may send a report (e.g., a beam report) to the network node 110. By using a triggering event detected by the UE 105 to initiate beam management, signaling overhead and power consumption may be reduced. For example, the UE may reduce the risk of (e.g., may avoid) needlessly requesting RSs and may report a reduced amount of information based on determining which beam of the plurality of beams B is the current beam and determining which beam of the plurality of beams B is (e.g., will be) the new beam.

In some embodiments, the UE 105 may indicate a degradation of the current beam. In some embodiments, the UE may indicate the degradation of the current beam and may request RSs to further assess beam quality and a potential replacement beam.

The following discussion is provided in four parts, including: (I) a discussion of a general framework for UEI beam management; (II) a discussion of defined triggering conditions that the UE 105 may use to determine whether to perform UEI beam management; (III) a discussion of procedures for transmitting a request (e.g., a report); and (IV) a discussion of receiving a response (e.g., based on an action) from the network node 110.

**I. A General Framework for UEI BM Procedures**

FIG. 3 is a diagram depicting operations of a first method (hereinafter "Method 1" or a method 3000) of a general framework for UEI BM, according to some embodiments of the present disclosure.

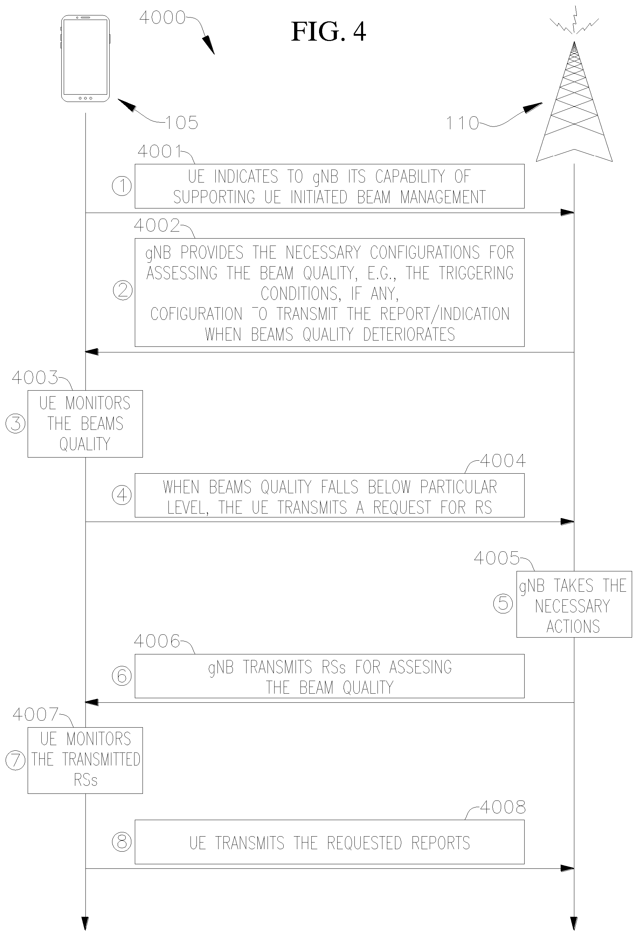

FIG. 4 is a diagram depicting operations of a second method (hereinafter "Method 2" or a method 4000) of the general framework for UEI BM, according to some embodiments of the present disclosure.

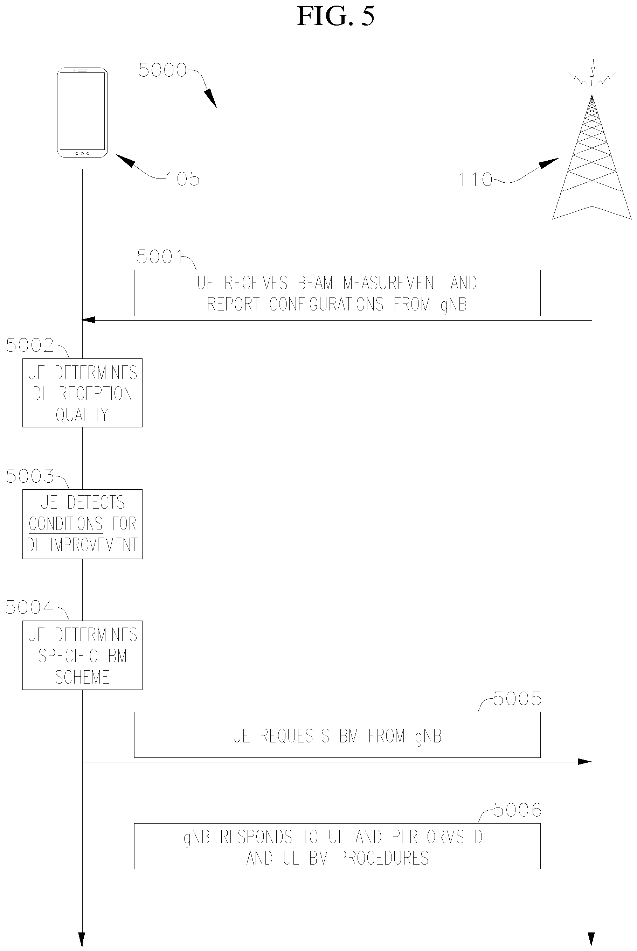

FIG. 5 is a diagram depicting operations of a third method (hereinafter "Method 3" or a method 5000) of the general framework for UEI BM, according to some embodiments of the present disclosure.

Referring to FIG. 3, the method 3000 (Method 1) may include one or more of the following operations. The UE 105 may indicate to the network node 110 that the UE 105 supports UE-initiated beam management via capability signaling (operation 3001). Based on the indicted capability signaling, the network node 110 may provide the UE 105 with configurations to facilitate assessing the quality of the beams (e.g., beam-quality-assessment data). For example, the configurations may facilitate assessing the quality of the currently used beam and respective qualities of potential candidate beams for replacement (operation 3002). For example, the network node 110 may provide the UE 105 with RSs configurations (e.g., configurations of RSs) and triggering-event data if the assessment is based on measuring RSs. The configurations of RSs may be used by the UE 105 to assess the quality of the current beam B and one or more new beams B. The network node 110 may provide the UE 105 with any suitable triggering conditions that may be used to reflect (e.g., to determine) the quality of the beams. The network node 110 may provide the UE 105 with the necessary configuration for transmitting a report (e.g., an indication) to the network node 110 when the quality of the currently used beam deteriorates below a certain level. In some embodiments, the network node 110 may transmit the RSs for assessing the quality of the beams, if needed (operation 3003). In some embodiments, an assessment procedure may be performed without RSs. For example, other metrics, including hybrid automatic repeat request (HARQ) acknowledgment/negative-acknowledgment (Ack/NACK) and/or the like, may be used to determine the beam quality.

The UE 105 may monitor the beam quality (operation 3004). For example, the UE 105 monitor the beam quality based on the RSs or other metrics. The UE 105 may transmit a request to the network node 110 when a triggering event occurs (e.g., when the beam quality level falls below a threshold) (operation 3005). For example, the UE 105 may transmit a request to the network node 110 based on determining a deterioration in the beam quality. In some embodiments, the request may include a measurement report. In some embodiments, the request may include an indication of the triggering event (e.g., that the beam quality has fallen below (e.g., is below) a certain level (e.g., the threshold)). When the network node 110 receives the request, the network node 110 may respond by performing an action to address the deterioration in the beam quality (operation 3006). In some embodiments, the network node 110 may transmit an acknowledgment (e.g., an explicit acknowledgment or an implicit acknowledgment) to the UE 105 (operation 3007). The UE 105 may monitor the response of the network node 110 (operation 3008). The operations of the method 3000 (Method 1) are discussed in further detail below.

Referring to FIG. 4, the method 4000 (Method 2) may include one or more of the following operations. The UE 105 may indicate to the network node 110 that the UE 105 supports UE-initiated beam management via capability signaling (operation 4001). In Method 2, unlike in Method 1, the network node 110 may not configure RSs for assessing the beam quality. The network node 110 may, instead, configure the trigger events (e.g., triggering conditions) and may provide the UE 105 with the configuration for transmitting a report (e.g., an indication) to the network node 110 when the triggering event occurs (e.g., when the quality of the currently used beam deteriorates below a certain level (e.g., the threshold)) (operation 4002). The UE 105 may monitor the beam quality (operation 4003). When triggering event occurs (e.g., when the quality of the currently used beam deteriorates below the threshold), the UE 105 may transmit a request to the network node 110 to transmit RSs to further assess the currently used beam and/or to assess the other candidate beams (operation 4004). The network node 110 may receive the request and perform a suitable action to address the deterioration in the beam quality (operation 4005). For example, the network node 110 may transmit the RSs (operation 4006). In some embodiments, the UE 105 may measure the transmitted RSs for assessing the beam quality (operation 4007). The UE 105 may report the configured report quantities to the network node 110 (operation 4008). The operations of the method 4000 (Method 2) are discussed in further detail below.

One difference between Method 1 and Method 2 is in the nature of the requests. The request of Method 1 may include the UE 105 sending the network node 110 an indication that the currently used beam has deteriorated and providing additional information (e.g., a measurement report). The request of Method 2 may include the UE 105 requesting that the network node 110 send the RSs themselves.

Referring to FIG. 5, the method 5000 (Method 3) may include one or more of the following operations. The UE 105 may receive beam measurement configurations and report configurations from the network node 110 (operation 5001). In some embodiments, the configurations may include configurations of multiple BM schemes (e.g., gNB-initiated BM schemes and/or UE-initiated BM schemes) with an index number. The UE 105 may determine (e.g., may detect) that a quality of a DL reception has degraded (e.g., deteriorated) (operation 5002). The UE 105 may detect conditions for DL reception improvement (operation 5003). The UE 105 may determine a preferred BM procedure (e.g., either a gNB-initiated BM schemes or a UE-initiated BM schemes) (operation 5004). The UE 105 may send a request to the network node 110 to perform BM for DL improvement (operation 5005). The network node 110 may respond to the UE 105 (based on the request) and perform DL BM procedures and UL BM procedures (operation 5006). The BM procedures may result in selection of a new beam pair. One or more of the operations of Method 3 may be similar to one or more of the operations of Method 1 and/or Method 2. The operations of the method 5000 (Method 3) are discussed in further detail below.

## II. Triggering Conditions for Determining Whether to Perform UEI BM

A common operation in the schemes of Method 1 and Method 2 is that the UE 105 may detect a degradation in the currently used beam based on the occurrence of an event (e.g., a triggering event or triggering condition) for determining whether to perform UEI BM (e.g., whether to perform a next operation of UEI BM such as transmitting a report or an indication to the network node 110).

The triggering event may be based on (e.g., may depend on) UE implementation. In some embodiments, the network node 110 may not configure the UE 105 with dedicated configurations for detecting the triggering event. For example, the network node 110 may not configure a particular threshold as a triggering event and may not configure or transmit additional RSs to assess whether the event has occurred. Such an approach may be beneficial to reduce the signaling overhead and to reduce the configurations that the network node 110 may provide to the UE 105. In some embodiments, the UE 105 may indicate to the network node 110 that the UE 105 is capable of autonomously detecting the occurrence of one or more triggering events for determining whether to perform UEI BM. For example, the UE 105 may indicate that the UE 105 is capable of performing UEI BM through a capability signaling process.

In Method 1, although the network node 110 may not configure (e.g., may not transmit) RSs to enable the UE to detect the degradation in the currently used beam, the network node 110 may still configure the UE 105 with additional RSs to enable the UE 105 to detect one or more candidate beams (e.g., to detect other new beams than the currently used beam).

In Method 2, the network node 110 may not configure dedicated RSs for assessing the currently used beam or for identifying the candidate beams. For example, after the network node 110 receives the request for RSs (see operation 4004 of FIG. 4), the network node 110 may transmit RSs to the UE 105 for assessing the currently used beam and/or for identifying the candidate beams (e.g., for identifying the potential candidate beams). For example, in some embodiments, the UE 105 may monitor the RSs transmitted by the network node 110 and may identify the currently used beam and/or the candidate beams based on the RSs. Based on the RSs, the UE 105 may also determine a quality of the currently used beam and/or determine a quality of the candidate beams based on the RSs.

In some embodiments, the network node 110 may configure the UE 105 with triggering-event data (e.g., different thresholds and/or conditions) that the UE may use to determine whether to perform UEI BM. In some embodiments, such triggering-event data may be provided via a higher layer signaling, such as a radio resource control (RRC) protocol. For example, the threshold value may be RRC configured (e.g., configured for Event-1, Event-2, or Event-7 of the Radio Access Network Radio Layer 1 (RAN1) Agreement). Triggering-event data (e.g., a threshold) may be used in different ways in different events. In some embodiments, triggering-event data (e.g., a triggering value) may be provided through a standard (e.g., may be provided in the 3GPP specification) and may be applied in case of the absence of the configured one (e.g., in the absence of a configured triggering event). For example, the network node 110 may transmit RSs (e.g., channel state information RS (CSI-RS), a synchronization signal block (SSB), a demodulation reference signal (DMRS), and/or the like), and the UE 105 may measure the transmitted RSs to compare the measurements with a threshold (e.g., a configured or predefined threshold).

In some embodiments, a UEI BM triggering threshold may include a measured signal strength. For example, Layer 1 RSRP (L1-RSRP) may be supported as a quality metric used for determining whether a triggering event has occurred. For example, the triggering event may include determining that the quality (e.g., based on L1-RSRP) of at least one new beam has become a threshold value better than the current beam, determining that the quality of the current beam is worse than a certain threshold (e.g., based on L1-RSRP), or determining that the quality (based on L1-RSRP) of at least one new beam has become a threshold value better than one of the beams associated with one or more activated TCI states. In some embodiments, the triggering threshold may include a measured reference signal received power (RSRP), a reference signal strength indicator (RSSI), and/or a signal-to-interference-and-noise ratio (SINR). In some embodiments, the triggering threshold may include an absolute threshold. For example, if the RSRP of a serving beam falls below a particular threshold, the UE 105 may assume that an event related to a degradation of the currently used beam is detected (e.g., may assume that a triggering event has occurred). Such a triggering event may be reflected by the following formula (2.01):

$$\text{measured RSRP of the currently used beam} < \text{RSRP\_th1}.$$

Wherein RSRP_th1 refers to a first triggering threshold for determining whether to perform UEI BM (e.g., whether to perform a next operation of UEI BM).
In some embodiments, the triggering threshold may be relative to the candidate beams. For example, a trigger-event detection for beam reporting may include the quality of at least one new beam, such as L1-RSRP, becomes a threshold value better than the current beam. In some embodiments, if the difference between the RSRP of the currently used beam and the RSRP of a candidate beam becomes less than the RSRP threshold, the UE 105 may assume that an event related to a degradation of the currently used beam is detected. Such a triggering event may be reflected by the following formula (2.02):

(measured RSRP of the currently used beam) - (measured RSRP of a particular candidate beam) < RSRP_th2.

Wherein RSRP_th2 refers to a second triggering threshold for determining whether to perform UEI BM.
In some embodiments, the measured signal strength (e.g., RSRP, RSSI, and/or SINR) may include instantaneous measured quantities based on each individual RS. In some embodiments, the measured signal strength may be measured via post processing to reduce a measurement fluctuation due to noise and fading. For example, the post processing may include infinite impulse response (IIR) filtering of the raw measurement as in the following formula (2.03):

$$F_n = (1 - a)*F_{n-1} + a*M_n.$$

Wherein: $F_n$ refers to the $n^{th}$ updated filtered measurement result, which is used for evaluating whether the event is triggered or not (e.g., whether a triggering event has occurred); $a$ refers to the filter coefficient; $F_{n-1}$ refers to the $(n-1)^{th}$ old filter measurement result; and $M_n$ refers to the $n^{th}$ physical measurement. In some embodiments, a formula (e.g., formula 2.03 above) may be defined through a standard (e.g., the 3GPP specification) and the value of $a$ may be configured by the network node 110. In some embodiments, the formula and/or the value of $a$ may be determined based on UE implementation. For example, the UE 105 may determine the formula and/or the value of $a$.
In some embodiments, the formula for calculating the degradation of a current beam may include an additional hysteresis parameter (e.g., *Hys*) to reduce the risk of a problematic ping-pong effect (e.g., to reduce the risk of producing a ping-pong effect). A ping-pong effect may occur based on a temporary change in signal strength. For example, a temporary reduction in signal strength may trigger a back-and-forth determination that a first beam is preferrable to a second beam at one moment and that the second beam is preferrable to the first beam at the next moment. For conditions of degradation of a currently used beam, a formula using an additional hysteresis parameter may include the following formula (2.04):

$$\text{(measured RSRP of the currently used beam + Hys)} < \text{RSRP\_th1}.$$

In some embodiments, a triggering condition based on comparing a relatively weak current beam to a candidate beam may include the following formula (2.05):

(measured RSRP of the currently used beam) - (measured RSRP of a particular candidate beam) < RSRP_th2.

In some embodiments, a formula for calculating the degradation of a current beam may include one or more additional offsets (e.g., offsets Ob, Oc, and/or Of) per bandwidth part (BWP), per cell, or per frequency. In some embodiments, the network node 110 may configure the offset values based on the nature of different environments. For example, a beam in a higher frequency environment may vary more. For example, measurements of a beam in a higher frequency environment may fluctuate more than measurements of a beam in a lower frequency environment. A formula for calculating the degradation of a current beam with additional offsets may include the following formula 2.06:

$$\text{(measured RSRP of the currently used beam) + Hys + Ob + Oc + Of} < \text{RSRP\_th1}.$$

Wherein: Hys refers to the hysteresis parameter; Ob refers to offset per BWP; Oc refers to offset per cell; and Of refers to offset per frequency band.

In some embodiments, a formula based on conditions including a comparison of a relative weakness of a current beam to a candidate beam may include the following formula (2.07):

(measured RSRP of the currently used beam) - (measured RSRP of a particular candidate beam) + Ob +Oc +Of < RSRP_th2.

Triggering UEI BM based on comparing a measurement with a particular threshold may be suitable for use with Method 1. For example, such a triggering event may include having the network node 110 transmit RSs for measuring the quality of the serving beam (e.g., the current beam) and/or for measuring the quality of other beams (e.g., candidate beams).

As discussed above, immature triggering of UEI BM (e.g., by just detecting a single instance at which the triggering conditions are satisfied) may cause a ping-pong effect if the quality of the currently used beam is quickly restored again. To avoid such a scenario, the network node 110 may indicate to the UE 105 after how many deterioration instances (e.g., a number of deterioration instances or degradation instances) the UE may perform the next operation (e.g., take the next step) in the procedure (e.g., transmitting a request to the network node 110), indicating that the currently used beam has deteriorated. Such an indication (e.g., the number of degradation instances after which the event is triggered) may be carried by a higher layer (e.g., by higher layers signaling, such as RRC). For example, a number of instances-where the UE 105 determines that the quality (e.g., based on L1-RSRP) of at least one new beam has become a threshold value better (e.g., stronger) than the current beam, that the quality of the current beam is worse than a certain threshold (e.g., based on L1-RSRP), or that the quality (based on L1-RSRP) of at least one new beam becomes a threshold value better than one of the beams associated with the activated TCI states for at least one same new beam-may be set to be greater than or equal to a configurable number (e.g., a threshold number of deterioration or degradation instances). In some embodiments, in the absence of such information regarding a number of deterioration instances, the UE 105 may apply a value associated with a beam failure recovery (BFR) procedure. For example, the UE 105 may apply the same value as in the BFR procedure (e.g., beamFailureInstanceMaxCount).

In some embodiments, the counting of beam deterioration instances towards the configured limit may be based on counting consecutive instances. For example, a configured limit may be set to three instances, and periodic RS may be used to assess (e.g., to identify and/or evaluate) the currently used beam. In this example, three consecutive periods of RS may satisfy the triggering condition such that the UE 105 may proceed to the next operation in the scheme (e.g., sending a request to the network node 110). In some embodiments, the deterioration instances may not necessarily be consecutive (e.g., may have intervening measurements that do not satisfy the triggering conditions). For example, it may be enough (to trigger a next operation of UEI BM) that the UE 105 detects a number of inconsecutive deterioration instances that exceed the configured limit within a time window. In some embodiments, the time window may be a fixed time window that starts upon the occurrence of the first instance and the duration of the time window may be configured by higher layers signaling (e.g., by RRC).

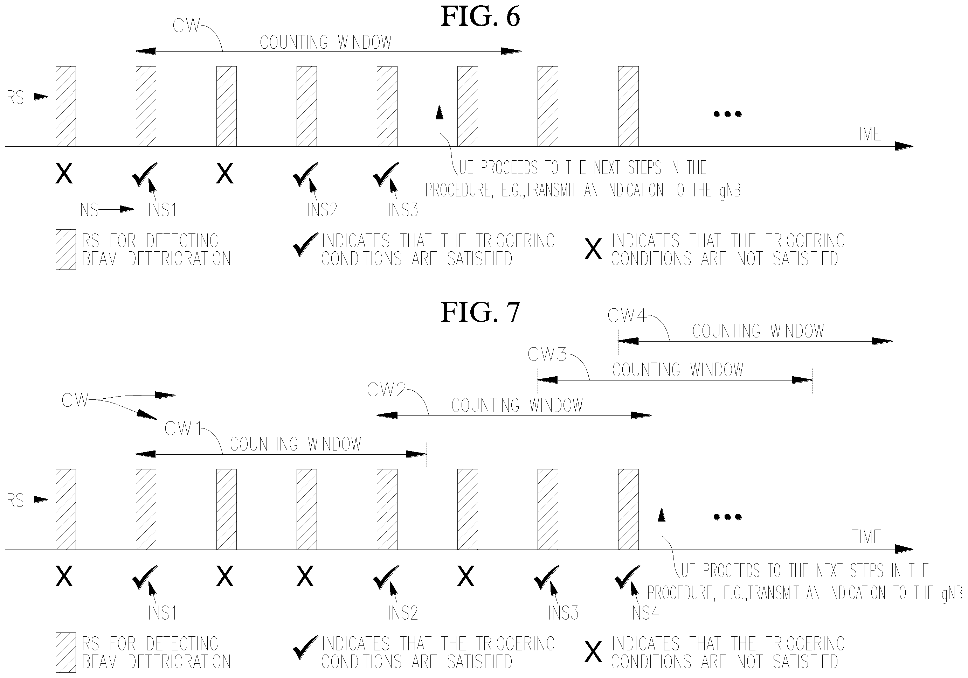

FIG. 6 is a diagram depicting a fixed window for counting triggering instances, according to some embodiments of the present disclosure.

Referring to FIG. 6, an example of a periodic RS used for assessing whether a triggering event has occurred is provided. The number of triggering instances INS needed to trigger the event is equal to three instances within a fixed counting window CW that starts from a first event (e.g., the second instance of the RS). After triggering instances INS occur three times within the counting window CW, even though the triggering instances are inconsecutive (e.g., occurring at second, fourth and fifth instances of the RS, while not occurring at a third instance), the UE may proceed to the next operations in the procedure, such as transmitting an indication to the network node, after the third occurrence at (e.g., after the third triggering instance INS occurring at) the fifth instance of the RS. In some embodiments, the UE may wait until the end of the configured window. For example, the window may be terminated once the window timer (e.g., the counting window CW) expires, regardless of whether the event is triggered or not. In some embodiments, the window may be terminated by the occurrence of the window timer expiring or based on the UE transmitting an indication to the network node before the window timer expires. In some embodiments, a new window may start from the first occurrence of the event (e.g., the triggering instance INS) after the termination of the previous window to ensure that there is at least one window between any two transmissions of an indication, by the UE, to the network node.

FIG. 7 is a diagram depicting a moving window for counting triggering instances, according to some embodiments of the present disclosure.

Referring to FIG. 7, in some embodiments, the UE may apply a moving window (e.g., a moving counting window CW) that restarts after receiving each triggering instance INS as shown in FIG. 7. Similar to the fixed window discussed above with respect to FIG. 6, the duration of the moving window may be configured via higher layers signaling. As shown in FIG. 7, multiple overlapping counting windows CW (e.g., CW1 through CW4) may be started by the occurrence of each triggering instance INS (e.g., at the second, fifth, seventh, and eighth instances of the RS). Once the number of triggering instances INS for satisfying the triggering-event conditions is satisfied (e.g., three triggering instances), the UE may transmit the indication to the network node in a first available occasion after the triggering condition (e.g., of three triggering instances occurring within one counting window CW) is met (e.g., satisfied) or after the end of the counting window CW (e.g., after a counting window CW expires). Such embodiments may enable more indications to be transmitted to the network node when the triggering condition is satisfied over a longer period of time. In some embodiments, the counting window CW may be terminated once the window timer expires, regardless of whether a triggering event has occurred. In some embodiments, the counting window CW may be terminated by the window timer expiring or by the UE transmitting an indication to the network node before the window timer expires.

In some embodiments, the counting window CW associated with a particular RS instance may start after some delay from the transmission instance of the particular RS instance. In such embodiments, the UE may be provided with time to receive the RS instance, to process the RS instance, and to check whether the triggering condition is satisfied or not. In some embodiments, the UE may indicate, to the network node, a suitable gap (e.g., a timing gap) via capability signaling. In some embodiments, the suitable gap may be predefined. For example, the gap may be provided in a standard (e.g., the 3GPP specification) or may be provided similar to a CSI processing timeline.

In some embodiments, to mitigate the ping-pong effect (other than by counting the instances), event triggered conditions may be based on an average of metrics. For example, the average of metrics may include an average of measurements for consecutive RSs and/or may occur within a counting window CW similar to the counting windows CW of FIGS. 6 and 7 discussed above.

In some embodiments, a UE-request procedure may be based on a physical layer measurement only. In some embodiments, the UE-request procedure may be based on an initial physical layer measurement followed by a medium access control (MAC) procedure, where a higher-layer counter and a timer are defined to reduce the possibility of false-alarm event detection at the UE. The counter may count the number of events (e.g., triggering instances) detected by the physical layer measurements at the UE, and the timer may be initiated by a first event detected by the UE. In some embodiments, the timer may have some periodicity that would include a specific, semi-statistically configured time, such that the event detection counter reaches a specific, semi-statistically configured value.

In some embodiments, there may be other specific events (e.g., conditions) for the UE to determine (e.g., to detect) a suitability of DL reception improvement (e.g., see operations 5002 and 5003 of FIG. 5 above). In operation 5002, the UE 105 may assess the DL reception strength and quality of one or more, or all, of the active beam pairs that are in use. To do this, the UE 105 may use the chosen receiver (Rx) beam (from an initial beam management process) to receive the transmissions from the network node 110 that employs the transmission (Tx) beam(s) indicated in the configuration phase in operation 5001. Multiple reception metrics, including channel quality indicator (CQI), RSRP, reference signal received quality (RSRQ), signal-to-noise ratio (SNR), and/or SINR may be measured by the UE 105. The UE 105 may share these measurements, possibly in the form of a CSI, with the network node 110, which may translate the shared measurements into a report on beam quality. In some embodiments, the UE may continuously or periodically monitor the reception of a current beam pair and other beam pairs. For instance, the UE 105 may conduct frequent measurements of active beam pairs at intervals (e.g., at set intervals), while some or all other available beam pairs may be monitored at less frequent intervals. This monitoring may be scheduled regularly or initiated by the network node 110 and/or by the UE 105 as needed. For example, a full beam sweep measurement of all available beam pairs may be performed in response to a result of a measurement of the active beam (e.g., as a result of a measured active beam quality being below a threshold). In some embodiments, a measurement of the active beam pair and a subset, or all, of the available beam pairs may be performed in response to a motion of the UE 105 or in response to an activity of the user (e.g., when the UE 105 rotates or when the user initiates a specific application).

In operation 5003 (of FIG. 5) the UE 105 may identify opportunities for potentially enhancing a reception performance, based on the above measurements and pre-configured trigger conditions (e.g., triggering conditions) from operation 5001. For example, the UE 105 may determine deteriorating conditions on a current beam pair or possible improvements in other beam pairs (e.g., alternative beam pairs). In some embodiments, the UE 105 may compare the measured metrics, such as signal strength and quality (e.g., RSRP, RSRQ, SINR, SNR, CQI), to one or more thresholds (e.g., one or more predefined or dynamically set thresholds) to evaluate channel quality. For example, if an RSRP of an existing beam pair falls below a certain threshold, the UE 105 may identify an opportunity for DL reception improvement. In some embodiments, changes in other monitored beams, such as one of K other monitored beams having a greater signal strength than the current beam, may trigger the UE 105 to perform DL reception enhancement. As used herein, the variable "K" refers to an integer greater than zero unless noted otherwise. In some embodiments, the rate of change in measurements such as a rapid change in one or more measured beams can be the triggering event for the UE 105 to perform DL reception enhancement. In some embodiments, the UE's motion, such as changing position or orientation, could also serve as a trigger. In some embodiments, triggering conditions may include SNR levels being below one or more specific thresholds for all DL RSs in a current transmission configuration indication (TCI) table and the maximum L1-RSRP becoming weaker than a threshold. In some embodiments, a number of beams (e.g., a count of beams), which have L1-RSRP measurements exceeding a first threshold, falling below a beam-number threshold may be another trigger condition. In some embodiments, trigger conditions may include physical downlink shared channel (PDSCH) SNR and/or physical downlink control channel (PDCCH) SNR. For example, a triggering event may occur if a most recent PDSCH SNR measurement and/or a most recent PDCCH SNR measurement is below a threshold for one or more (e.g., for all) received DL RSs.

In some embodiments, trigger conditions may include the maximum L1-RSRP among all measured beam pairs by UE being smaller than (e.g., less than) a threshold. For example, a strongest beam pair link of current active beam pairs becoming weaker than (e.g., less than) a threshold may be a triggering event. In some embodiments, the threshold may be pre-configured by RRC (e.g., by an RRC protocol).

In some embodiments, trigger conditions may include a new beam out of the K monitored beams being (e.g., becoming) stronger than one or more (e.g., stronger than all) of the K monitored beam pair links.

In some embodiments, trigger conditions may include the current beam (e.g., a previously strongest beam) no longer being the strongest beam among a set of K monitored beam pair links.

In some embodiments, trigger conditions may include one or more (e.g., all) of the K monitored beam pair links becoming weaker than a threshold. The threshold may be pre-configured by RRC. Such a trigger condition may serve as a warning (e.g., a pre-warning) of a future beam failure event.

In some embodiments, trigger conditions may include a motion of the UE 105. For example, a rotation, a change of orientation, and/or a change of location (e.g., a change of position) may be a trigger event.

In some embodiments, a new quantity may be introduced for indicating the report quantities to be reported by the UE 105 to the network node 110. For example, the new quantity may be introduced as "UE-initiated-report," or similar. When such a report quantity is indicated to the UE 105 by the network node 110, the UE 105 may not report any quantity for the *CSI-reportConfig* unless triggering conditions similar to one or more of the trigger conditions discussed above are satisfied (e.g., occur) or any other suitable (e.g., relevant) conditions occur. What the UE may report, and which channel may carry the report are discussed in further detail below, as part of the request (e.g., reporting) details.

In legacy New Radio (NR), there are supported combinations of CSI report configurations and CSI-RS configurations depending on their time behavior as periodic, semi-persistent, or aperiodic. Such combinations may be updated. For example, Table 1 below provides examples of updates to the supported combinations from NR.

Table 1: Triggering (e.g., Activation) of CSI Reporting for the Possible CSI-RS Configurations:

|  | Periodic CSI reporting (legacy) | Semi-persistent CSI reporting (legacy) | Aperiodic CSI reporting (legacy) | UE-initiated-report (new) |
|---|---|---|---|---|
|  |  |  |  |  |
| Periodic CSI-RS | No dynamic triggering/activation (legacy) | Support reporting on PUCCH or PUSCH (legacy) | Supported on PUSCH (legacy) | Supported (new) |
| Semi-persistent CSI-RS | Not supported (legacy) | Support reporting on PUCCH or PUSCH (legacy) | Supported on PUSCH (legacy) | Supported (new) |
| Aperiodic CSI-RS | Not supported (legacy) | Not supported (legacy) | Supported on PUSCH (legacy) | Not supported (new) |

The updates to the supported combinations from NR may be associated with Method 1, where RSs may be transmitted for assessing the currently used beams and the potential candidate replacement beams. In some embodiments, periodic or semi-periodic (P or SP) CSI-RS may be associated with UE-initiated-report, where the UE 105 may assess the triggering condition. Once satisfied, the UE may initiate reporting. For example, L1-RSRP may be supported as a measurement quantity on SSB and periodic CSI-RS for beam management. In some embodiments, the combination of aperiodic- (AP-) CSI-RS and UE-initiated-report may not be supported, and the existing legacy signaling to support AP-CSI-RS and AP-CSI reporting may be used. In some embodiments, instead of the AP-CSI-RS and AP-CSI reporting combination, AP-CSI-RS and UE-initiated-report may be supported, where the UE 105 may not report any quantity unless one or more of the triggering conditions, discussed above, are satisfied or unless any other conditions, which may result in saving power by reducing the risk of (e.g., avoiding) transmitting unnecessary reports.

In legacy NR, the UE indicates to the gNB a total number of available computational processing units (CPUs) of the UE within a component carrier (CC) and across all CCs via capability signaling (e.g., simultaneousCSI-ReportsPerCC and simultaneousCSI-ReportsAllCC). The duration which the CPU is occupied may depend on whether the reporting is periodic, semi-persistent, or aperiodic. In some embodiments, based on the introduction of the new quantity UE-initiated-report, and to avoid increasing UE complexity, a definition may be provided (e.g., indicated by the UE 105 or provided by a standard) for how many CPUs are occupied. As used herein, a "CPU" refers to a computational processing unit of a UE, unless noted otherwise.

In some embodiments, a legacy CPU pool may be used for UE-initiated-report. Since the network node 110 may not know whether the UE 105 may transmit a report, from a CPU-occupation perspective, UE-initiated-report may be treated similar to a CSI report with CSI-ReportConfig with higher-layer parameter reportQuantity set to "none." In other words, a beam report may occupy a same CPU as a channel state information (CSI) report with a reporting quantity of "none," and the beam report may occupy the same CPU for a same duration as the CSI report with the reporting quantity of "none." For example, the CPU may be occupied starting from the first or last symbol of periodic RSs (e.g., an earliest one of periodic RSs or semi-persistent RSs) for detecting beam deterioration or for identifying the other candidate beams for a duration (e.g., a duration of time). This duration may be predefined. For example, the duration may be provided by a standard (e.g., in the 3GPP specification), indicated to the network node 110 by UE capability signaling, or may be equal to $Z'3$, $Z3$ or a function of $Z'3$, $Z3$ (e.g., max ($Z'3$, $Z3$)), where $Z'3$, $Z3$ are used for defining a processing time for CSI reports for beam management in legacy NR (e.g., with reportQuantity set to "cri-RSRP," "ssb-Index-RSRP," etc.). The duration may also be equal to $Z1$, $Z'1$ or a function of $Z1$, $Z'1$ (e.g., max ($Z'1$, $Z1$)), where $Z'1$, $Z1$ are used for defining a processing time for CSI reports for beam management based on SINR reporting in legacy NR (e.g., with reportQuantity set to "cri-SINR," "ssb-Index-SINR," etc.).

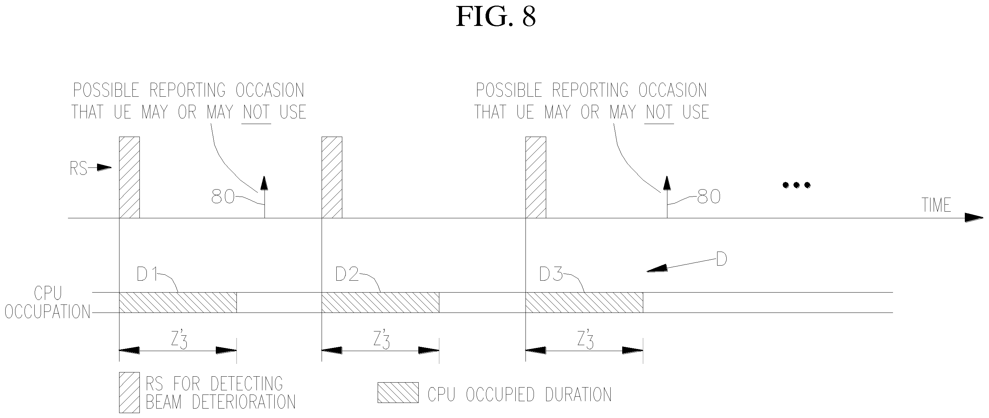

FIG. 8 is a diagram depicting an example of CPU occupation for periodic RS for detecting the deterioration of the currently used beam, according to some embodiments of the present disclosure.

Referring to FIG. 8, the CPU is occupied $Z'3$ symbols from the first or last symbol of each transmission occasion of the RS (e.g., the first, second, and third instances of the RS). For example, the CPU of the UE 105 may be occupied for a first duration D1 corresponding to the first instance of the RS, for a second duration D2 corresponding to the second instance of the RS, and for a third duration D3 corresponding to the third instance of the RS. In some embodiments, a possible reporting occasion 80 may occur after the first instance of the RS and/or after the third instance. The UE 105 may or may not use a given possible reporting occasion 80.

In some embodiments, if the combination of aperiodic CSI-RS and UE-initiated-report is supported, the occupied CPU may be defined relative to the triggering DCI and relative to the channel carrying the request (e.g., the report) from the UE 105 to the network node 110. The channel request (e.g., the channel report) and its content are discussed in further detail below.

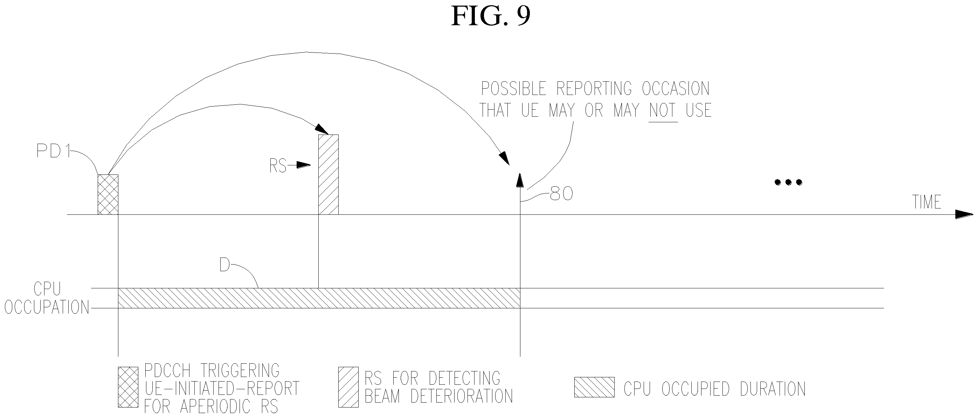

FIG. 9 is a diagram depicting an example of CPU occupation for a PDCCH-triggering UE-initiated report for aperiodic RS, according to some embodiments of the present disclosure.

Referring to FIG. 9, in some embodiments, the CPU may be occupied from the first or last symbol of the PDCCH triggering the report (e.g., PD1) to max ($Z'_3$, $Z_3$) (e.g., the duration D). Because the reporting is aperiodic reporting, the CPU occupation starts from the triggering DCI, instead of from the RS itself. A possible reporting occasion 80, which the UE 105 may or may not use, may correspond to the end of the duration D.

In some embodiments, the number of occupied CPUs may be one, regardless of the number of RSs configured to assess the current beam(s) and/or to assess the new beams. In some embodiments, the number of occupied CPUs may be a function of the number of RSs configured to assess the current beam(s) and/or to assess the new beams. For example, the number of occupied CPUs may be equal to the number of configured RSs to assess the current beams and/or to assess the new beams.

In some embodiments, similar to the CPU concept in CSI reporting, the UE 105 may indicate its capability of supporting multiple simultaneous calculations corresponding to UE-initiated reporting through a processing unit (PU) occupation in a component carrier, as well as across all component carriers. For example, a UE may not be expected to be configured with a number of reporting settings larger than its reported processing unit capability. In some embodiments, a legacy $N_{CPU}$ framework may be shared between CSI reporting and UE-initiated reporting. This may include some additional signaling regarding the processing unit occupation that UE reserves for such UE-initiated reporting out of signaled legacy $N_{CPU}$ capability.

In some embodiments, a new capability may be defined (e.g., may be used) specifically for processing unit occupation of the UE-initiated reporting. The number of PUs occupied for such reporting may be defined as a function of a number of DL RSs used for such reporting that is requested, by the UE 105, to be transmitted for measurements.

In legacy NR, the UE can indicate to the gNB other information about a maximum number of simultaneous "active" CSI-RS and CSI-RS ports per CC that the UE can handle, via capability signaling. For example, via *maxNumberSimultaneousNZP-CSI-RS-PerCC* and *totalNumberPortsSimultaneousNZP-CSI-RS-PerCC.* The definition of when the CSI-RS is considered active varies depending on its nature as follows.

For A-CSI-RS, the CSI-RS is considered active starting from the end of the PDCCH containing the request and ending at the end of the physical uplink shared channel (PUSCH) containing the report associated with this A-CSI-RS. For SP-CSI-RS, the CSI-RS is considered active starting from the end of the activation command being applied and ending at the end of the deactivation command being applied. For P-CSI-RS, the activate duration starts when P-CSI-RS is configured and ends when the P-CSI-RS configuration is released.

In some embodiments, the CSI-RS resources and/or ports used for detecting beam deterioration in a UE-initiated beam-management report may be counted towards the maximum number of active CSI-RS resources and ports per CC or across all CCs for legacy CSI reporting as indicated by the UE capability signaling.

In some embodiments, for P CSI-RS and/or SP CSI-RS used for detecting beam deterioration, the determination of the active CSI-RS resource and/or port may follow a legacy definition, which does not depend on a report type. For example, the determination of the active CSI-RS resource and/or port may depend on when P CSI-RS and/or SP CSI-RS is activated (e.g., configured) and deactivated (e.g., released).

In some embodiments, if the combination of aperiodic (AP) CSI-RS and UE-initiated-report is supported, because the UE may not transmit the report, it may be of interest to define the active period in this case. In some embodiments, the legacy definition of active period of aperiodic CSI-RS for legacy CSI reporting may be followed, with a difference from the legacy definition being that the channel carrying the UE-initiated-report may differ from PUSCH as discussed in further detail below. In such embodiments, the definition may be modified as follows. For aperiodic CSI-RS for detecting beam deterioration or identifying the other candidate beams, the active duration may start from the end of the PDCCH containing the request and may end at the end of the scheduled channel containing the request (e.g., the report) associated with this aperiodic CSI-RS, regardless of whether the UE transmits the request (e.g., the report).

In some embodiments, the activate duration for aperiodic CSI-RS for detecting beam deterioration or identifying the other candidate beams may be decoupled from its report, as the UE 105 may not transmit depending on the triggering conditions. In such embodiments, the active duration for this CSI-RS may be defined relative to the triggering PDCCH and CSI-RS. For example, the active duration may be the max ($Z'_3$, $Z_3$) where $Z_3$ starts from the first or last symbol of the triggering PDCCH and $Z'_3$ starts from the first or last symbol of the aperiodic CSI-RS.

In terms of a processing timeline, in some embodiments, the legacy definitions of the CSI reference resource Z and Z' may be applied based on assuming the UE 105 transmits a request (e.g., a report), even if the UE 105 decides not to transmit because the triggering conditions are not satisfied.

It should be understood that the values (e.g., the legacy values) of Z1, Z2, Z3, Z'1, Z'2, and Z'3 (Z1, Z3, Z'1, and Z'3 being discussed above) are examples for determining a duration of a CPU occupation, an active resource, or a processing timeline. However, the present disclosure is not limited thereto. For example, in some embodiments, the UE 105 may indicate to the network node 110, via capability signaling, values (e.g., new values) that may differ from the legacy values of Z1, Z2, Z3, Z'1, Z'2, and Z'3.

In some embodiments, the UE 105 may use HARQ information for thresholds to assess the quality of the currently used beam (e.g., to determine whether a triggering event has occurred). In such embodiments, the network node 110 may not need to configure dedicated RSs for assessing the currently used beam and identifying the candidate beams. For example, the network node 110 may configure the threshold value via higher layers signaling (e.g., via RRC). In some embodiments, the threshold value may be predefined (e.g., may be provided in the 3GPP specification). In some embodiments, the threshold may be a percentage of HARQ-ACK values corresponding to PDSCHs in a particular window. For example, if HARQ-ACK values of 80% of PDSCHs within a window are determined as NACK, the UE 105 may assume a triggering event has occurred and proceed to the next operation in the procedure.

In some embodiments, the window may start at (or after) $n$ slots (e.g., $n$ symbols), or other time units (e.g., milliseconds (ms)) before the slot (e.g., the symbol) carrying an uplink (UL) channel carrying the potential request (e.g., the report) for a UE-initiated beam-management procedure. For example, a potential reporting occasion 80 may be determined based on a given period of time passing. In some embodiments, the window may end $m$ slots (e.g., $m$ symbols) before the slot (e.g., the symbol) carrying UL channel carrying the potential request (e.g., the report) for the UE-initiated beam-management procedure. In some embodiments, the UE 105 may expect to have enough processing time to decode the PDSCH(s) within the window to make a decision on whether to transmit a request (e.g., a report) to the network node 110. For example, if the UL channel carrying the request (e.g., the report) is in symbol $L$, the window (e.g., the last PDSCH in the window) may end at least $T_{proc,1}$ before the start of symbol $L$ and its cyclic prefix (CP), wherein $T_{proc,1}$ refers to an amount of time (e.g., a time span) that the UE 105 takes to process a received PDSCH. In some embodiments, the network node 110 may provide the UE 105 with the value of $n$ or $m$, via higher layers signaling, such as RRC. In some embodiments, the value of $n$ or $m$ may be predefined (e.g., provided in the 3GPP specification or set to another value such as m = $T_{proc,1}$. In some embodiments, the UE 105 may indicate to the network node 110 the minimum and/or maximum value of $n$ or $m$ that the UE 105 may support.

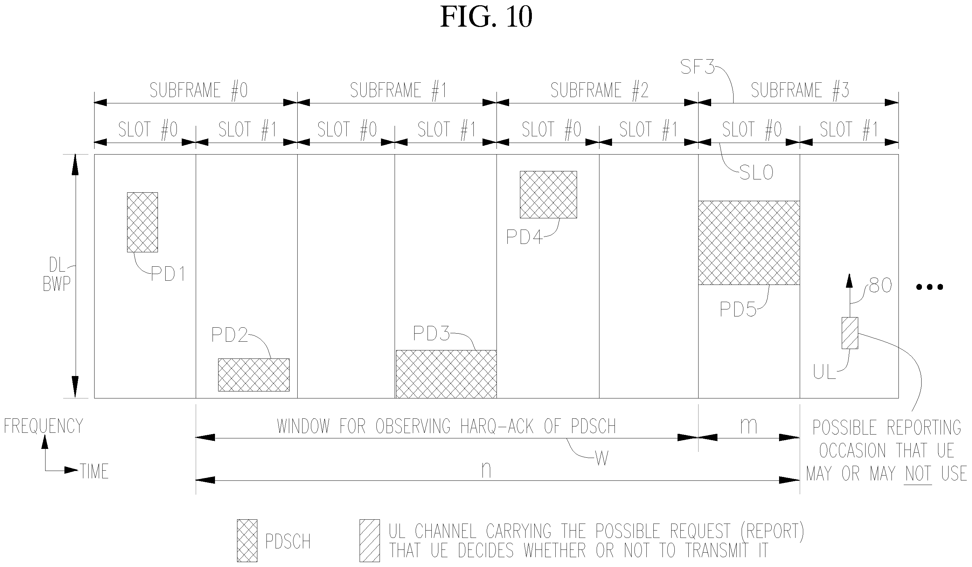

FIG. 10 is a diagram depicting an example of a UL channel to carry the potential request (e.g., the potential report), according to some embodiments of the present disclosure.

Referring to FIG. 10, a PDSCH (e.g., PD5) in Slot #0 (e.g., SL0) in Subframe #3 (e.g., SF3) is not included in the window W, as the UE 105 may not have enough time to decode it before the transmission occasion of the UL channel carrying the potential request (e.g., the potential report). In some embodiments, the UE 105 may count the number of Acks or NACKs corresponding to PDSCHs within the window W to determine whether a triggering event has occurred.

Aspects of embodiments involving UL channel and multiple PDSCHs used to determine whether a triggering event has occurred are discussed in further detail below.

In some embodiments, additional conditions may be applied to determine whether a HARQ-ACK corresponding to a PDSCH may contribute to the evaluation of a triggering condition, even if the PDSCH falls within a time window dedicated for such a calculation. In some embodiments, any combination of the following conditions may be applied.

In some embodiments, determining whether a HARQ-ACK corresponding to a PDSCH may contribute to the evaluation of a triggering condition may be based on whether the PDSCH is a dynamic PDSCH or a semi-persistent scheduling (SPS) PDSCH. For example, only dynamic PDSCHs within a window may contribute to the evaluation of the condition. In some embodiments, determining which of dynamic PDSCH or SPS PDSCH to use may be configured by higher layers signaling or may be predefined (e.g., may be provided in the 3GPP specification).

In some embodiments, determining whether a HARQ-ACK corresponding to a PDSCH may contribute to the evaluation of a triggering condition may be based on a beam used to transmit PDSCH. For example, the UE 105 may determine a beam (or a TCI state) that is used for scheduling most PDSCHs within a window. The UE 105 may use the HARQ-ACK corresponding to the PDSCHs associated with the identified beam (or the identified TCI state) to evaluate the triggering condition and may exclude other PDSCHs associated with different beams (or differing TCI states). In some embodiments, other rules (e.g., additional rules) may be applied. For example, the network node 110 may indicate the beam (or TCI state) that the corresponding PDSCHs may contribute in the evaluation of the triggering condition. The indication may be configured via higher layers signaling (e.g., via RRC, medium access control-control element (MAC-CE), or dynamically via downlink control information (DCI).

In some embodiments, determining whether a HARQ-ACK corresponding to a PDSCH may contribute to the evaluation of a triggering condition may be based on a priority level. For example, the UE 105 may use the PDSCHs belonging to a certain priority level (e.g., a low priority level or a high priority level) to evaluate whether the triggering condition is satisfied. The priority level may be configured by higher layer signaling (e.g., by RRC) or predefined (e.g., provided in the 3GPP specification).

In summary, in some embodiments, measurements and conditions for determining whether a triggering event has occurred may be based on monitoring a deteriorated beam, either by directly measuring RSRP, RSRQ, or SINR associated with the beam, or by the HARQ statistics for the associated PDSCHs. In some embodiments (e.g., in some special scenarios), beam switching may be based on other metrics not directly associated with the beam.

For example, in some embodiments, the network node 110 may perform beam management based on the location of the UE 105 (e.g., locations including indoor-factory environments, high-speed trains, or certain geostationary orbit (GEO) non-terrestrial network (NTN) deployments. In some embodiments, the event may be triggered by the locations of UE 105, where the location of the UE 105 may be acquired, by the UE 105, based on NR positioning methods. In some embodiments, the location of the UE 105 may be acquired, by the UE 105, based on a method outside of 3GPP signaling (e.g., based on a global navigation satellite system (GNSS)).

In some embodiments, a location-triggered event may be based on one or two location measurements $Ml1$/ $Ml2$ and one or two locations threshold $Los_{Thresh1}$/$Los_{Thresh2}$ and associated hysteresis.

For example, trigger conditions based on a single threshold, where $Ml1$ may be a function of a distance between the UE 105 and a reference location 1, as in the following formula (2.08):

$$Ml1 - Hys1 > Los_{Thresh1}$$

Trigger conditions based on two thresholds, where $Ml1$ may be a function of a distance between the UE 105 and a reference location 1, and wherein $Ml2$ may be a function of a distance between the UE 105 and a reference location 2:

$$Ml1 - Hys1 > Los_{Thresh1}$$

$$Ml2 + Hys1 > Los_{Thresh2}$$

A moving direction and a speed of the UE 105 may be by-products of information for location services like GNSS. In some embodiments, the moving direction and the speed of the UE 105 may be used for conditions or for additional conditions for triggering events.

In some embodiments, a built-in micro-electromechanical system (MEMS) of the UE 105, which may perform gyroscope-like functionality, and which may provide good precision of UE rotation-angle information, may include (e.g., may generate) metrics that may be used for triggering beam switching for certain scenarios.

## III. Transmitting the Request

Once an event is triggered (e.g., once a triggering event has occurred) according to Method 1 or Method 2, the UE 105 may transmit a report or a request to the network node 110 (see FIG. 3, operation 3005 and FIG. 4, operation 4004). As used herein, the terms "report" and "request" are used interchangeably, unless noted otherwise.

In some embodiments, although the report may be initiated by the UE 105, as shown in Table 1 above, the possible occasions to carry such a request (e.g., to carry such a report) may include (e.g., may be) periodic occasions or semi-persistent occasions, and the UE may not use an occasion if the triggering conditions are not satisfied.

In some embodiments, as discussed above, a new report quantity may be introduced. For example, the new report quantity may be referred to as "UE-initiated-report." UE-initiated-report may indicate that the UE may transmit the request (or report) when the triggering conditions are satisfied. In some embodiments, based on *reportQuantity* being set to UE-initiated-report, information to be reported may be any combination of the following.

In some embodiments, reporting information (e.g., report information) may include an indication of the deterioration of the currently used beam, the preferred TCI-state or preferred beam, RSRP, SINR, RSSI, and/or the like. In some embodiments, the network node 110 may additionally indicate the report quantity via higher layers signaling, such as UE-initiated-report-degardationIndication, UE-initiated-report-preferredTCI, UE-initiated-report-cri-RSRP, UE-initiated-report-ssb-RSRP, and/or the like. For example, DL RS resource indicator and LR-RSRP may be supported. In some embodiments, information to be reported may be predefined (e.g., provided in the 3GPP specification). In some embodiments, the UE 105 may indicate, to the network node 110 via UE-capability signaling, which reporting method (e.g., which combination of reporting) is supported by the UE 105.

In some embodiments, based on the network node 110 transmitting RSs for assessing the currently used beams and the candidate beams, as in Method 1 (see FIG. 3, operation 3003), any of the following containers, discussed below (in subsections A-F), may be used to carry any of the proposed requests (or reports) to the network node 110.

## A. Using PRACH as a Container

In some embodiments, the UE 105 may use Physical Random-Access Channel (PRACH) to indicate that a quality of the currently used beam has deteriorated and/or to inform the network node 110 of a candidate beam for replacing the currently used beam.

In some embodiments, for indicating that the quality of the currently used beam has deteriorated (e.g., that a measured RSRP has become less than a threshold), the UE 105 may transmit contention-free random-access (CFRA). In some embodiments, the network node 110 may provide the UE 105 with one or more RACH occasion (RO) IDs (e.g., identifiers or identifications) that may be used. In some embodiments, the network node 110 may indicate to the UE 104 which preamble index is to be used. In some embodiments, the network node 110 may provide the UE 105 with such information via higher layers signaling. For example, the higher layers signaling may include RRC, such as *ra-occasion-List-beam-deterioration* and *preambleIndex-beam-deterioration*, which may be selected out of the configured ROs and preambles. In some embodiments, when the used beam (e.g., the currently used beam) changes, the same RO and/or preamble index may be used. For example, the network node 110 may dedicate an RO and/or a preamble index for indicating the deterioration of the currently used beam. For example, in a unified TCI state framework, the currently used beam may be defined as the beam used as indicated by the unified TCI state framework. In other words, the currently used beam may be determined as the beam indicated by the unified TCI state framework. Even if the network node 110 changes the beam, the same RO and/or preamble index may be used. For example, the "current beam" may be a beam corresponding to an indicated TCI state.

In some embodiments, a different beam (or TCI state) may be associated with a different RO or preamble index that the UE 105 may use to indicate to the network node 110 that the corresponding beam (or TCI state) has degraded.

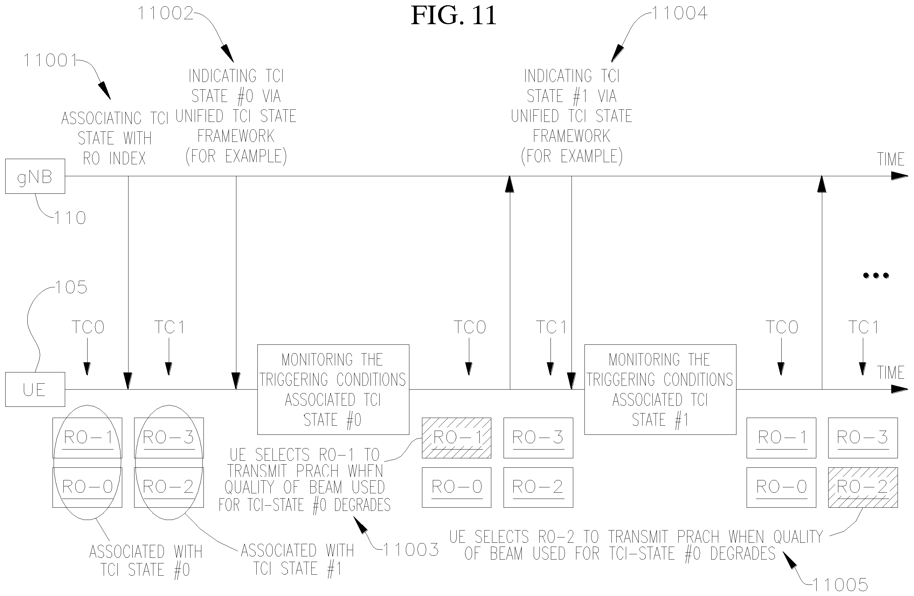

FIG. 11 is a diagram depicting the use of CFRA to transmit, from the UE 105 to the network node 110, an indication that the quality of the currently used beam has degraded, according to some embodiments of the present disclosure.

Referring to FIG. 11, the network node 110 may configure two TCI states (e.g., TC0 and TC1) to be used in unified TCI state framework and may associate the TCI states with particular ROs to be used for PRACH transmission when the quality of the currently used beam deteriorates (operation 11001). The TCI state #0 (e.g., TC0) is associated with RO-0 and RO-1 while TCI state #1 (e.g., TC1) is associated with RO-2 and RO-3. When TC0 is indicted via unified TCI state framework (operation 11002), and the quality of the corresponding beam degrades, the UE may choose RO-1 to transmit PRACH indicating that the triggering condition is satisfied (operation 11003). When network node 110 switches to TC1 (operation 11004) and when the quality of the associated beam degrades, the UE 105 may use RO-2 to transmit PRACH indicating that the triggering condition is satisfied, and beam quality has deteriorated (operation 11005).

In some embodiments, to establish such associations between TCI states and ROs for PRACH transmission, as part of TCI state configurations or RS configurations used as the source quasi co-location (QCL) for any TCI state, the network node 110 may include the RO index or preamble index that the UE 105 may use when the beam quality degrades. The association between TCI state (or beam) and RO index or preamble index may be one-to-one, may be one-to-many, or may be many-to-one.

In some embodiments, the UE 105 may indicate to the network node 110 the preferred candidate beam (or TCI state), not just that the currently used beam (or TCI state) has degraded.

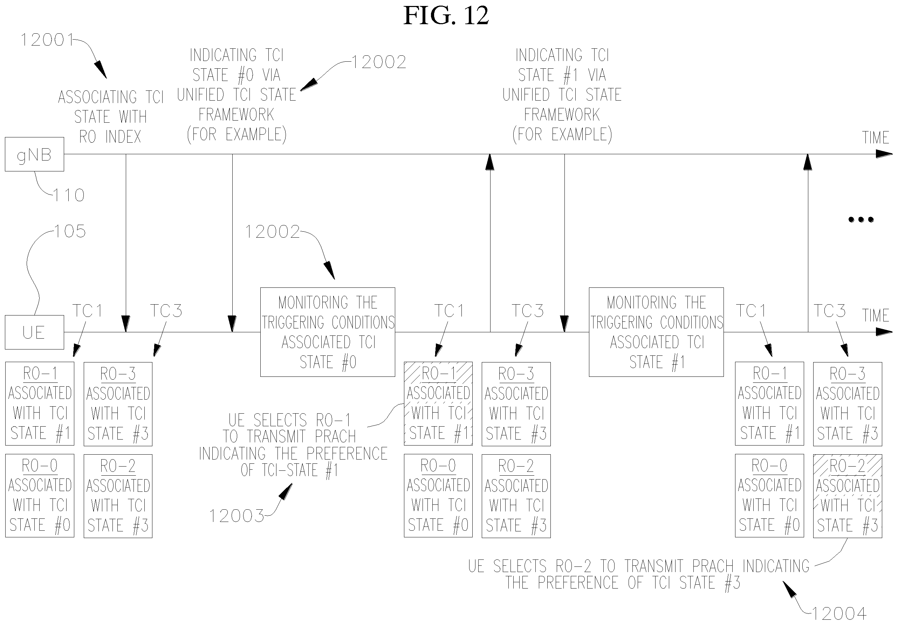

FIG. 12 is a diagram depicting an example of using CFRA to transmit an indication from the UE 105 to the network node 110 of the preferred beam (or TCI state) when the currently used beam degrades, according to some embodiments of the present disclosure.

Referring to FIG. 12, in some embodiments, the UE 105 may indicate to the network node 110 the preferred TCI state (or beam) rather than just indicating that the currently used beam has degraded. In such embodiments, ROs may be associated with TCI states and a TCI state #3 (e.g., TC3) may be associated with both RO-2 and RO-3 (e.g., one-to-many association) (operation 12001). When the event is triggered (e.g., when the currently used beam corresponding to TCI state #0 (e.g., TC0) triggers the condition) (operation 12002), the UE 105 may indicate the preferred beam corresponding to TCI state #1 (e.g., TC1) by transmitting PRACH in RO-1 (operation 12003). Later, the UE may indicate a beam corresponding to TC3 by transmitting PRACH in RO-2 (operation 12004).

In some embodiments, rather than using CFRA, contention based random access (CBRA) may be used. In such embodiments, a new MAC-CE may be introduced to indicate the deterioration of the currently used beam or indicating the preferred beam (or TCI state). The new MAC-CE may be transmitted in Msg3 or MsgA. The new MAC-CE may directly carry the index of the preferred TCI state or the preferred RS ID that may be used as the QCL source RS, and the UE 105 may indicate the preferred TCI state or the preferred RS by, for example, indicating their IDs. In some embodiments, the MAC-CE may include (e.g., may be) a bitmap, where each bit corresponds to the configured TCI states or to the configured RS IDs that may be used as the QCL source RS, and the UE 105 may indicate the preferred TCI state or the preferred RS by setting the corresponding bits to one, for example. In some embodiments, the MAC-CE may be used to provide some of the measurements that the UE 105 conducted for assessing the triggering conditions, such as L1-RSRP, L1-SINR, RSSI and/or the like. The reporting of such quantities is discussed in further detail below.

### B. Using PUCCH Carrying SR as a Container

In some embodiments, a scheduling request (SR) may be sent from the UE 105 to the network node 110, via a physical uplink control channel (PUCCH), to indicate the degradation of the currently used beam and/or to indicate the preferred TCI state (or the preferred beam). For example, the association method discussed above for using PRACH as a container may be extended to using PUCCH carrying SR as a container. In some embodiments, if the UE 105 only indicates the deterioration of the currently used beam, the network node 110 may associate the TCI state, or the RSs used, as the QCL source with scheduling request configurations to be used, by the UE 105, when the quality of the corresponding beam degrades. For example, as part of the configurations of the TCI states or RSs, the network node 110 may include *SchedulingRequestId-beamDegradation* pointing to a particular scheduling request configuration.

In some embodiments, the UE 105 may indicate to the network node 110 the preferred candidate beam (or the preferred candidate TCI state), rather than only indicating that the currently used beam (or currently used TCI) has degraded. In this case, the network node 110 may associate the TCI state or the RSs used as the QCL source with scheduling request configurations to be used when the UE selects the preferred TCI state or RS ID. For example, as part of the configurations of the TCI states or as part of the configurations of the RSs, the network node 110 may include *SchedulingRequestId-beamDegradation* pointing to a particular scheduling request configuration.

In some embodiments, similar to CBRA discussed above, the UE 105 may transmit SR to obtain a grant for PUSCH in which a new MAC-CE or piggybacked uplink control information (UCI) may be transmitted to indicate the deterioration of the currently used beam and/or to indicate the preferred beam (or the preferred TCI state). As used herein, a "piggybacked UCI" refers to UCI that may be used to carry a report and it is transmitted on PUSCH instead of PUCCH. In some embodiments, the MAC-CE or piggybacked UCI may directly carry the index of the preferred TCI state or the RS ID that may be used as the QCL source RS and the UE 105 may indicate the preferred TCI state or the preferred RS by indicating their IDs. In some embodiments, the MAC-CE or piggybacked UCI may include (e.g., may be) a bitmap, where each bit corresponds to the configured TCI states or RS IDs that may be used as the QCL source RS and the UE 105 may indicate the preferred TCI state or the preferred RS by, for example, setting the corresponding bits to one. In some embodiments, the MAC-CE or piggybacked UCI may be used to provide some of the measurements that the UE 105 conducts for assessing the triggering conditions, such as L1-RSRP, L1-SINR, RSSI and/or the like. The reporting of such quantities is discussed in further detail below.

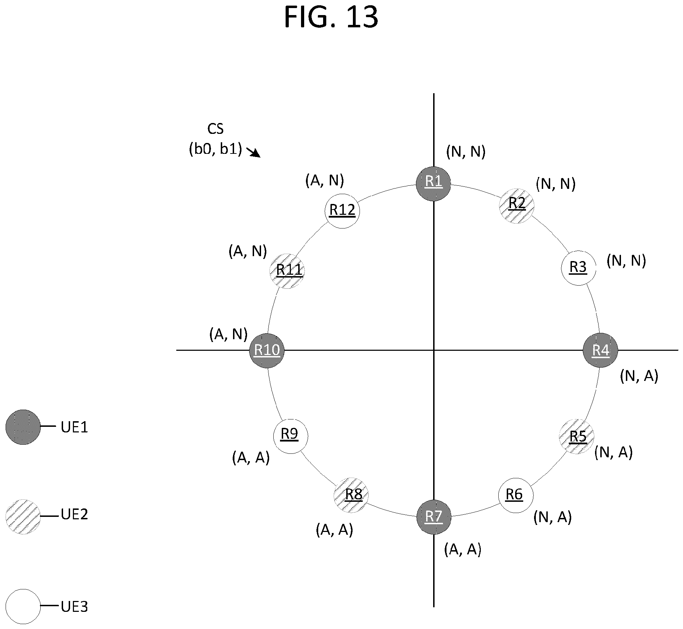

FIG. 13 is a diagram depicting a modification of cyclic shifts (CSs) in a PUCCH format for reporting UEI-BM information, according to some embodiments of the present disclosure.

In some embodiments, the UE 105 may transmit a report (e.g., UEI-BM information) to the network node 110, via SR, based on PUCCH formats (PF) being repurposed. For example, in some embodiments, PF0 and PF1 may be repurposed by allowing transmission of a greater number of bits.

Referring to FIG. 13, in some embodiments, with PF0, 12 CSs are available for transmission of up to two bits (e.g., b0 and b1) and for multiplexing signals from up to three different UEs (e.g., UE1, UE2, and UE3). In FIG. 13, A refers to Ack and N refers to NACK. In some embodiments, the network node 110 may configure the UE 105 with SR resources (e.g., one or more of resources R1 through R12 in FIG. 13) for UE-initiated beam reporting (e.g., SR resources dedicated to UE-initiated beam reporting). In some embodiments, the SR resources may be used to transmit up to three bits. A mapping between bits and CS values may be specified by a standard (e.g., in the 3GPP specification). In such embodiments, SR resources may be repurposed (e.g., modified), such that one or more SR resources are not used to multiplex different UEs and/or are not used to multiplex HARQ-ACK and SR for the same UE. Instead, in such embodiments, one or more SR resources (e.g., R1, R2, and/or R3) may be dedicated to the UE-initiated beam reporting. The information that is conveyed by the bits in the SR may be similar to the information discussed above for indicating the degradation of the currently used beam and/or to indicate the preferred TCI state (or the preferred beam).

In some embodiments, a similar approach may be used to transmit up to two bits in a SR resource with a PUCCH format to transmit two information bits. For example, a SR resource with PF1 may be configured for the purpose of UE-initiated beam reporting and may be used to transmit two bits to the network node 110. The information that the two bits convey may be similar to the information discussed above for indicating the degradation of the currently used beam and/or to indicate the preferred TCI state (or the preferred beam).

Additionally, in some embodiments, some SR resources may be used to indicate which event is triggered when multiple events are configured. For example, when multiple triggering events are configured for proceeding with UEI BM, one or more SR resources may be used to indicate which triggering events have occurred.

## C. Using PUCCH or PUSCH Carrying UCI as a Container

In some embodiments, PUCCH or PUSCH carrying UCI may be used as a container. In such embodiments, the PUCCH or PUSCH carrying the request (e.g., report) from the UE 105 may be configured similar to legacy periodic CSI or semi-persistent CSI reporting on PUCCH or PUSCH. In some embodiments, this PUSCH may be similar to one of the occasions for configured grant PUSCH type 1 or 2. In some embodiments, this PUSCH may be a PUSCH scheduled by an uplink grant. As discussed above, the UE 105 may only use the PUCCH occasion, or may only use the PUSCH occasion, when the triggering conditions are satisfied.

In some embodiments, a single bit may be used to indicate a deterioration in the currently used beam (e.g., the beam indicated via a unified TCI state framework).

In some embodiments, to indicate a preferred TCI state, a bitmap having a length of activated TCI states, where each bit corresponds to a particular TCI state may be used. For example, a most significant bit (MSB) (e.g., a first MSB) may map to the TCI state that maps to the lowest codepoint in the TCI field in the scheduling DCI or in the activating DCI, the second MSB may map to the TCI state that maps to second lowest codepoint in the TCI field in the scheduling DCI or in the activating DCI, and so on. The size (e.g., the length) of the bitmap may be equal to the number of activated TCI states or may be equal to the size of the TCI field in the scheduling DCI or in the activating DCI, as depicted in Table 2 below. Although the example of Table 2 depicts the bitmap method as applied to activated TCI states, in some embodiments, the bitmap method may be applied for all configured TCI states. In such embodiments, the first MSB may map to the TCI state with the lowest ID, the second MSB may map to the TCI state with the second lowest ID, and so on. In such embodiments, the size (e.g., the length) of the bitmap may be equal to the number of configured TCI states. This approach may be beneficial for allowing the UE 105 to indicate multiple preferred TCI states.

Table 2: Mapping UCI bitmap to the activated TCI states:

| Activated TCI states by MAC-CE | Codepoint of the TCI field in scheduling DCI or activating DCI | Bitmap for indicating the preferred TCI states |
| --- | --- | --- |
| TCI #x | 000 | 1st MSB: **0**0000000 |
| TCI #y | 001 | 2nd MSB: 0**0**000000 |
| ⋮ | ⋮ | ⋮ |
| TCI #z | 111 | Least significant bit (LSB): 0000000**0** |

In some embodiments, to indicate the preferred TCI state ID, the UCI may carry the index (or indices) of the preferred TCI states. For example, a field of the UCI may indicate the absolute index of the TCI state. For example, in some embodiments, if the network node 110 configures N TCI states (N being an integer greater than zero), the size of the field may be $log_2(N)$ (e.g., log base two of N). In some embodiments, the field may indicate the relative index of the TCI state within the activated set of TCI states. For example, if the number of activated TCI states mapped to a distinct codepoint in the TCI field in the scheduling DCI or in the activating DCI is M (M being an integer greater than zero), the size (e.g., the length) of the field may be $log_2(M)$ (e.g., log base 2 of M).

In some embodiments, to provide the network node 110 with more flexibility, the UE 105 may indicate RSRP, SINR, RSSI, or the like using legacy beam reporting (e.g., when *reportQuantity* is set to cri-RSRP, ssb-Index-RSRP, or the like). For example, the UE 105 may report differential RSRP or differential SINR and a corresponding resource ID when the triggering conditions are satisfied. In some embodiments, similar to the legacy approach, a RSRP or a SINR of the best beam (e.g., of the strongest beam) may be defined by seven bits and differential reporting relative to the best beam may be defined by four bits.

In some embodiments, regarding the overhead of such UE-initiated reporting, and based on the metrics included in the report, some alphabets may be defined for amplitude and phase quantization. In some embodiments, the quantization may be provided in a differential manner for the amplitude relative to a reference amplitude and a separate indicator may be used to determine the DL RS corresponding to the reference amplitude. In some embodiments, some reporting metrics (e.g., some reporting parameters) may be based on only quantized amplitude reporting while some other metrics may be based on quantized phase reporting in addition to quantized amplitude reporting. In some embodiments, the granularity of phase quantization and amplitude quantization may be the same. In some embodiments, the granularity of phase quantization and amplitude quantization may be separately defined for each reporting quantity.

In some embodiments, the solutions discussed above may also be applied when a MAC-CE is used for reporting.

In some embodiments, the UE 105 may be configured with a single event, or multiple events, associated with different reporting quantities and/or report sizes. Similar to the aforementioned triggering events, the event (for example the reported triggering event) may include an indication that the quality of the currently used beam has deteriorated (e.g., the measured RSRP falls to below a certain threshold). In some embodiments, the report may include only a single bit. In some embodiments, the report may include some measurements associated with the beam, such as the corresponding RSRP. In some embodiments, the report may include only seven bits representing the absolute RSRP value of the beam (e.g., of the deteriorated beam).

In some embodiments, the triggering event may be that a new beam becomes better than the current beam (e.g., the new beam may become better than the current beam by a certain threshold). In such embodiments, the report may include only a single bit indicating that the event has occurred. In some embodiments, the report may include multiple measurements such as a measurement of the new beam (or new beams) and/or a measurement of the currently used beam. For example, the absolute value measurement (e.g., RSRP) of the currently used beam and one or more differential measurements (e.g., RSRP measurements) for the new beam (or beams) may be reported to give an accurate measurement of the quality of the currently used beam. In some embodiments, the UE 105 may report the absolute value measurement (e.g., RSRP) of the best new beam and one or more differential measurements (e.g., RSRP) for the current beam and one or more other new beams (e.g., one or more remaining beams), which are not the best new beam.

In some embodiments, the beam ID may be included in the report. In some embodiments, the report may include reporting information that may be used to derive the beam ID according to certain rules, which are discussed in further detail below.

In some embodiments, a similar kind of reporting may occur if the event (e.g., the triggering event) is defined as a quality of a new beam becoming better than a certain threshold. In such embodiments, the report may include only a single bit indicating that the event has occurred. In some embodiments, the index of the new beam (or new beams), and/or their corresponding measurements, may be reported.

In some embodiments, for the events discussed above, or for any other suitable event, the current beam may be determined implicitly. For example, in some embodiments, the current beam may be the beam indicated by the unified TCI state framework. For example, an RS for the current beam may be implicitly derived from a QCL RS of an indicated TCI state. In some embodiments, among the configured TCI states or activated TCI states, the current beam may be the beam associated with lowest TCI or with the highest TCI. In some embodiments, the current beam may be the beam determined by QCL assumption for control resource set (CORESET) with the lowest ID.

In some embodiments, the new beam may be determined implicitly. For example, in some embodiments, the new beam may be one of the beams associated with a configured TCI or with an activated TCI that is not the currently used beam. For example, under unified TCI framework, if there are eight activated TCI states and a beam associated with the first activated TCI state is indicated as the currently used beam, then the remaining beams associated with remaining seven activated TCI states may be considered candidate beams. In some embodiments, one or more beams associated with TCI states other than the lowest TCI or the highest TCI, when used to indicate the current beam, may be implicitly determined to be candidate beams. In some embodiments, one or more new beams may include one or more beams determined by a QCL assumption for CORESET other than the beam with the lowest ID (if the beam with the lowest ID is used for indicating the current beam).

In some embodiments, one or more current beams and one or more new beams may be indicated explicitly (e.g., may be explicitly configured). For example, in some embodiments, the network node 110 may configure two sets for RSs. A first set may include the RSs associated with the current beams and a second set may include RSs associated with the new beam. For example, *CSI ResourceConfig* for *resourcesForChannelMeasurement* linked with *CSI-ReportConfig* for UE-initiated beam management, may include two sets of RSs for the current beam(s) and the new beam(s). In some embodiments, a single set of RSs may be configured, where the current beam(s) may be particular beam(s) in the set (e.g., a first beam may be the current beam, and the remaining beams may be considered to be new beams).

In some embodiments, if a report occasion is associated with a single event, both the UE 105 and the network node 110 may have a common understanding of the quantity to be reported and of the report size. For example, the report size may be fixed and associated with the event (e.g., the triggering event) as in **Fehler! Verweisquelle konnte nicht gefunden werden.**.

Table 3: Sizes of UE-initiated beam management reports:

| Event | Size of the report |
|---|---|
| Event-1: Quality of the current beam is worse than a certain threshold. | • Single bit indicating that the event has occurred, or<br>• Number of bits indicating the measurement quality of the current beam, e.g., 7 bits indicating absolute RSRP. |
| Event-2: Quality of at least one new beam, such as L1-RSRP, becomes a threshold value better than the current beam. | • Single bit indicating that the event has occurred, or<br>• Number of bits indicating the measurement quality of the current beam, e.g., 7 bits indicating absolute RSRP, and/or |
|  | • Number of bits indicating the measurement quality of the new beams, either as absolute value or relative to the current beam, and/or<br>• Number of bits for indicating the indices of the new beams Ids, CSI-RS resource indicator (CRI) or synchronization signal/physical broadcast channel block resource indicator (SSBRI). For example, if the set of the new beams determined either explicitly or implicitly has 4 beams, then 2 bits are used to indicate RS Ids associated with the new beams based on order of how RSs are determined or configured. In general, number of bits for indicating the indices of the candidate beam can be $$\lceil m \log_2(\text{number of new beams}) \rceil,$$ , where m is the number of reported candidate beam which can be predefined (e.g., provided in the specification) and may be equal to 1.<br>If there is only a single new beam determined/configured, no bits may be used to determine the RS associated with it. |
| Event-3: Quality of a new beam is better than a certain threshold. | • Single bit indicating that the event has occurred, or<br>• Number of bits indicating the measurement quality of the current beam, e.g., 7 bits indicating absolute RSRP. |
|  | • Number of bits for indicating the indices of the new beams Ids, CRI or SSBRI. For example, if the set of the new beams determined either explicitly or implicitly has 4 beams, then 2 bits are used to indicate RS Ids associated with the new beams based on order of how RSs are determined or configured. In general, number of bits for indicating the indices of the candidate beam can be $$\lceil m \log_2(\text{number of new beams}) \rceil,$$ , where m is the number reported candidate beams which can be predefined (e.g., provided in the specification and may be equal to 1).<br>If there is only a single new beam determined/configured, no bits may be used to determine the RS associated with it. |
| Event-4: Quality of the current beam is worse than a first threshold 1, and quality of at least one new beam is better than a second threshold 2. | Similar to event-2 |

In some embodiments, instead of using predefined sizes for the UE-initiated beam management report, as part of the event configurations, the network node 110 may indicate information such that the report size is fixed and known to both the UE 105 and the network node 110. For example, in Event-2 (see Table 3 above), the network node 110 may indicate the number of new beams to be reported. For example, higher layer signaling, such as *nrofReportedRS,* may be repurposed to indicate the number of new beams to be reported or a new parameter may be used. For example, one or more beams (e.g., N greater than or equal to one beam) may be reported in a report instance, where at least one of N reported beams satisfies the condition of Event-2 and N is configured by the network node 110. The value of N may include {1, 2, 3, 4}.

In some embodiments, if PUCCH occasions or PUSCH occasions carrying the possible UE-initiated beam-management report are provided according to a semi-persistent CSI reporting framework, or according to configured grant PUSCH type 1 or 2, and there are multiple events associated with this configuration, the activation DCI or MAC-CE may select one of the events. For example, if CSI-ReportConfig for SP CSI reporting is linked to Event 1 and Event 2, then activation DCI or MAC-CE may select one from among Event 1 and Event 2 or may select both Event 1 and Event 2. For example, if Event 1 is selected, and when it is triggered, the report payload (e.g., the reporting data) may include information based on Event 1 and according to its predefined (e.g., its configured) size. If both Event 1 and Event 2 are selected, when any (e.g., when either) of them is triggered, the report payload may include information based on the triggered event(s) and according to its predefined (e.g., its configured) size. Selecting both Event 1 and Event 2 may increase a burden on the network node 110 because the network node 110 may not know (e.g., may not have data indicating) which event is triggered. In some embodiments, a new field may be introduced to indicate the event to be used. For example, if there are four events, then two bits may be used to indicate the event to be used.

In some embodiments, if a report occasion is associated with multiple events or a single event where the payload (e.g., where the reporting data) can vary (e.g., reporting different number of beams and/or their corresponding measurements), blind decoding (e.g., the blind-decoding nature) at the network node 110 may be increased because the network node 110 may not know (e.g., may not have data indicating) which event is triggered. To address this issue, a similar concept to UCI part 1 and UCI part 2 in the CSI framework may be used. For example, in this framework, the UCI part 1 may have a fixed size and may provide information to enable the network node 110 to determine the size of UCI part 2. This concept of two-part reporting can be applied to either of first and second UL channels as defined in Mode A and Mode B of operations and agreed in RAN1 #116b, as follows:

**Agreement@RAN1 #116b**

On beam report transmission procedure for UE-initiated/event-driven beam reporting, following modes are supported:

- Mode A (dynamically scheduling UCI by gNB):

  - Step 1: UE transmits a first PUCCH (one-bit/multi-bit) to request a resource for a second UL channel to carry beam report

    - FFS: Request format, e.g., SR or a new UCI type.

  - Step 2: UE detects the DCI format to indicate a resource for a second UL channel to carry beam report.
  - Step 3: Beam report is transmitted in second UL channel.

    - FFS: Details on the second UL channel, e.g., whether the second UL channel is PUCCH, PUSCH or both

  - This mode is basic UE capability (i.e. all UE supporting UE-initiated/event-driven beam reporting should support this feature).
  - No new DCI format is introduced.

- Mode B (UCI in pre-configured resource(s) for second UL channel):

  - Step 1: UE transmits a first PUCCH (one-bit/multi-bit) notifying a second UL channel to carry beam report

    - FFS: Notification format, e.g., SR or a new UCI type.

  - Step 2: UE transmits the beam report in the second UL channel.

    - FFS: Details on the second UL channel, e.g., whether the second UL channel is PUCCH, PUSCH or both

- The notification in Step1 is in a separate reporting instance from the beam report in Step 2.

FFS: Whether UE receives acknowledge information with response to each step for all modes

For above procedures, cross-CC beam reporting is supported for both modes.

- FFS: Details.

Where the first part of UEI report with a fixed size is located in the first UL channel and the second part of UEI report with a variable size is located in the second UL channel. Alternatively, such aforementioned two parts of reports may both be located in the second UL channel only. The former may be applicable for scenarios where the first UL channel is multi-bit, and the latter may applicable for scenarios where the first UL channel is one-bit only.

In some embodiments, the first UL channel (e.g., a PUCCH or a CG-PUSCH) and the second UL channel (e.g., a PUCCH or a CG-PUSCH) may be separated in the time domain by a number of symbols (e.g., by one or more symbols). In some embodiments, an occasion of CG-PUSCH or an occasion of PUCCH may be used to send the beam report only when the triggering conditions are satisfied.

As discussed above, a UE may be configured with a single event or multiple events associated with different reporting quantities and/or report sizes. Similarly, a UE may be configured for UEI reporting over one CC or multiple CCs each with different reporting quantities and/or report sizes. In some embodiments (e.g., in all such scenarios), the network node 110 may have some ambiguity regarding UEI report decoding in terms of the content and size of the report.

If the first PUCCH channel in step 1 of Mode A provides only one-bit indication to request a resource for a second UL channel to carry a beam report, or the first PUCCH channel in step 1 of Mode B provides only one-bit indication to notify a second UL channel to carry a beam report, the beam report may include two parts in the second UL channel, where the first part may have a fixed size and may provide information to enable the network node 110 to determine the size of the second part.

To illustrate, the first part may indicate that the second part carries UEI information associated with event type(s) (e.g., one or more trigger-event types) and/or associated with CCs. For example, a bitmap structure may be used in the first part of the report to indicate that a report of event type(s) or CC(s) will be carried in the second part of the report. Alternatively, the first part of report may carry an index of the event type(s) or an associated CC to be reported in the second part of the report.

For example, in some embodiments, a bitmap of the size of the events (including event types and/or CCs) may be linked to a reporting occasion where the most significant bit may correspond to the event with the lowest id (e.g., the lowest ID), the second most significant bit may correspond to the event with the second lowest id and so on. In some embodiments, the size of the first part of report may be $log_2(M)$ where $M$ refers to the total number of events (including event types and/or CCs) when only one event can be reported at each reporting occasion. In some embodiments, the size of the first part of report may be $log_2(C\binom{M}{m})$, where $C\binom{M}{m}$ refers to combinations of $m$ out of $M$ when m events can be reported at each reporting occasion with $m = 1,..,M$. In some embodiments, the size of the first part of report may be $log_2(\sum_m^{M'} C\binom{M}{m})$ when up to M' events are reported at each reporting occasion, where $M' = 1,..,M$ is to be decided at the UE 105.

In some embodiments, where the report associated with each event (including event types and/or CCs) is assumed to be fixed or a pre-configured payload size, the first part of the report may additionally include at least one UEI report. Such specific report(s) that are reported in the first part may be determined based on a pre-defined constant rule, based on pre-defined priority rules, semi-statically configured to the UE 105, or dynamically indicated to UE 105. In some embodiments, such a dynamic indication to the UE 105 may be indicated as a part of DCI in step 2 of Mode A of operation. In some embodiments, a rule may provide that the event with the lowest ID may be included in the first part.

If the first PUCCH channel in step 1 of Mode A provides a multi-bit indication to request a resource for a second UL channel to carry a beam report, or the first PUCCH channel in step 1 of Mode B provides a multi-bit indication to notify a second UL channel to carry a beam report, the first part of the beam report may be included in the first UL channel, as discussed above, and the second part of the beam report may be included in the second UL channel. The first part may have a fixed size and may provide information to enable the network node 110 to determine the size of the second part.

In some embodiments, for the case of multiple events (including event types and/or CCs) associated with the same reporting occasion, UCI part 1 (e.g., the first part of the beam report) may indicate which events are reported. For example, a bitmap of the size associated with (e.g., based on) the events (including event types and/or CCs) linked to this reporting occasion may indicate which events may be carried in UCI part 2 (e.g., the second part of the beam report). In some embodiments, the MSB (e.g., the first MSB) may correspond to the event with the lowest ID, the second MSB may correspond to the event with the second lowest ID, and so on. In some embodiments, assuming the report associated with each event has a fixed (e.g., a configured) payload size, the network node 110 may determine the size of UCI part 2. In some embodiments, UCI part 1 may carry the index of the event(s) (among all possible event types and/or CCs) to be reported in UCI part 2. In some embodiments, the size of UCI part 1 may be $\log_2$(number of events) (e.g., log base two of the number of events), when only one event can be reported at each reporting occasion or alternatively may be

$$log_2(C(\overset{\check{M}}{m}))$$ where $C(\overset{M}{m})$ refers to combinations of $m$ out of $M$ when m events can be reported at each reporting occasion with $m$ = 1,.., $M$. In some embodiments, the size of the UCI part 1 may be $$log_2(\textstyle\sum_m^{M'} C(\overset{M}{m}))$$, when up to M' events are reported at each reporting occasion, where $M'$ = 1,.., $M$ is to be decided at the UE 105.

In some embodiments, where the report associated with each event (including event types and/or CCs) is a fixed or a pre-configured payload size, the UCI part 1 may additionally include at least one UEI report. Such specific report(s) that are reported in the UCI part 1 may be determined based on a pre-defined constant rule, based on pre-defined priority rules, semi-statically configured to the UE 105, or dynamically indicated to the UE 105. For example, the event with the lowest ID, or associated with a CC with the lowest ID may be included in the UCI part 1.

In some embodiments, the order of UEI reporting of triggered events (including event types and/or CCs) may be semi-statically configured or dynamically indicated to the UE 105. In some embodiments, an order of UEI reporting of triggered events (including event types and/or CCs) may be determined based on a pre-defined constant rule, such as all CCs of Event-2, all CCs of Event-1, and all CCs of Event-7, as in the following RAN1 agreements:

**Agreement@RAN1 #116b**

On UE-initiated/event-driven beam reporting, regarding trigger-event detection for beam reporting, at least support Event-2: Quality of at least one new beam, such as L1-RSRP, becomes a threshold value better than the current beam.

- At least L1-RSRP is supported as quality metrics used for Event-2

  • FFS: How the L1-RSRP is used to determine the triggering event (e.g. timer, counter, filter coefficient)
  • FFS: Whether the network controls how the L1-RSRP is used to determine the triggering event

- Regarding RS measurement for the new beam for Event-2, down-select one or more of the following:

  • Option-3a (explicit manner): The RS(s) for new beam(s) are explicitly configured by RRC (e.g., reusing legacy configuration of RS measurement or in *TCI-State*) or MAC-CE
  • Option-3b (implicit manner): The RS(s) for new beam(s) are implicitly derived from QCL RS(s) of activated TCI state(s).
  • Option-3c (implicit manner): The RS(s) for new beam(s) are implicitly derived from QCL RS(s) of configured TCI state(s).

- Note-1: 'New/current beam' is for discussion purpose.
- Note-2: Other trigger events/quality metrics (e.g., L1-SINR) are not precluded.
- Note-3: For above implicit manner(s), if there are two QCL RSs in a TCI state, the measurement RS is derived from RS w.r.t. QCL-TypeD, if applicable.

**Working Assumption@RAN1 #118**

On UE-initiated/event-driven beam reporting, regarding trigger events, besides for Event-2, Event-1 and Event-7 are both supported.

- Event-1: Quality of the current beam is worse than a certain threshold.
- Event-7: Quality of at least one new beam, such as L1-RSRP, becomes a threshold value better than the RS derived from the activated TCI state with the M-th best quality.

  • M is RRC configured with subjective to UE capability signalling

    ♦ UE may only indicate a single candidate value or not support Event-7.

- The additionally supported events will reuse the same design as event 2 - unless there is consensus to do otherwise
- The additionally supported events will be lower priority compared to event 2.

In some embodiments, a pre-defined constant rule for order of UEI reporting of triggered events may be (Event-2, Event-1, Event-7) for a first CC, (Event-2, Event-1, Event-7) for a second CC, and so on. The above examples may be expanded to include any suitable order of event types and CC IDs.

In some embodiments, a priority rule for events (including event types and/or CCs) may be specified. Such priority may be established based on the content of reports. For example, in some embodiments, priority may be based on: a total size of a report corresponding to each event type, a configured number of beams for each event (including event types and/or CCs), whether the report contains L1-RSRP measurements as well, and/or some prioritized CC and cell IDs (e.g., a serving cell ID first and then additional PCIs with some pre-defined or configured rules such as order of indexing, and/or the like). In some embodiments, such reporting order may be dynamically indicated to the UE 105 based on the size of the reports, a given configured number of beams to be reported, as well as available resources at the network node 110.

In some embodiments, when the same reporting occasion 80 is associated with a single event with a variable payload (e.g., reporting a different number of beams and/or their corresponding measurements), UCI part 1 may indicate information for what data is to be reported in UCI part 2 to derive its size. For example, if the Event 2 (discussed above) is used and the quality of multiple new beams becomes better than the current beam, the UE 105 may indicate to the network node 110 in UCI part 1, the number of beam indices and/or the corresponding measurement to be reported in UCI part 2. In some embodiments, the network node 110 may configure the UE 105 with a set for the number of beams that can be reported via higher layer signaling (e.g., a set such as {n1, n2, n3, n4}). In such embodiments, UCI part 1 may have two bits indicating the number of beams to be reported in UCI part 2 (e.g., the value of the two bits may map to one of n1, n2, n3, or n4. In some embodiments, the possible number of beams to be reported may be determined based on the size of the determined (e.g., of the configured) set of new beams. For example, if the network node 110 configures eight new beams, the possible numbers of beams may be {n1, n2, n3, n4, n5, n6, n7, n8} and UCI part 1 may have 3 bits to select one of these values. In some embodiments, other rules may be applied, such as half the size of the candidate beams. For example, the number of bits in UCI part 1 indicating the number of beams to be reported in UCI part 2 may be equal to (e.g., based on) log base 2 of the quotient of the number of new beams divided by two (e.g., $\left\lceil \log_2 \frac{\text{Number of new beams}}{2} \right\rceil$).

In some embodiments, an indication of the skipped PUCCH or of the skipped PUSCH resources may be provided by the UE 105 to the network node 110. For example, if the UE 105 is in a condition where it uses the PUCCH resources to transmit the UE-initiated report more frequently than it skips the PUCCH resources, it may be beneficial for the UE 105 to indicate to the network node 110 that the next PUCCH occasions are skipped, instead of indicating that the next occasions are used. In some embodiments, the UE 105 may declare a capability for such a feature. In some embodiments, the network node 110 may configure the UE 105 with SR resources to indicate skipped occasions. In such embodiments, a positive SR may indicate to the network node 110 that the next PUCCH occasion(s) or PUSCH occasions are skipped. In some embodiments, there may be a common understanding between the UE 105 and the network node 110 as to which and how many of the next PUCCH occasions or PUSCH occasions are skipped. In some embodiments, the information regarding which and how many of the next PUCCH occasions or PUSCH occasions are skipped may be established by defining a skipped window. In some embodiments the skipped window may start from a certain time $T_{skip}$ (a "skipped time") from the end of the SR PUCCH and may end after a certain duration, which may be configured by the network node 110 or fixed in a standard (e.g., the 3GPP specification). For example, the duration may include a certain number of slots or a certain number of PUCCH occasions. In some embodiments, the skipped time $T_{skip}$ may be configured by the network node 110 in terms of a number of orthogonal frequency division multiplexing (OFDM) symbols or slots and subcarrier spacing (SCS) of the PUCCH cell.

In some embodiments, to enable both a skipped and a used indication, the UE 105 may indicate to the network node 110 which mode the UE 105 is in via a single bit in UCI, which indicates, for example, mode 1 or mode 2. In some embodiments, after a certain amount of time after transmission of the PUCCH carrying the UCI, the network node 110 may assume that future indications by the UE 105 may be provided according to the indicated mode. For example, in some embodiments, if the UE 105 indicates mode 1 to the network node 110, future indications via SR may indicate one or more used occasions. In some embodiments, if the UE 105 indicates mode 2 to the network node 110, future indications via SR may indicate one or more skipped occasions. For example, a one-bit indication in the first PUCCH channel to notify a second UL channel to carry beam report may be supported.

In some embodiments, an indication of used PUCCH occasions or skipped PUCCH occasions may be done with a single SR resource (e.g., PF0 or PF1) configured for this specific purpose. For example, in some embodiments, if PF0 is used to transmit two bits with certain CS values to the network node 110, one CS may be used to indicate used occasions, and one other CS may be used to indicate skipped occasions.

In some embodiments, an indication of skipped PUCCH occasions or PUSCH occasions may be implicit. For example, in some embodiments, when the UE 105 uses a periodic PUCCH occasion or a periodic PUSCH occasion to transmit a UE-initiated report with or without prior indication to the network node 110, the next $M$ PUCCH resources or the next $M$ PUSCH occasions or all the PUCCH resources or all the PUSCH occasions within a time window may be skipped. In such embodiments, the time window may be defined from the end of the used PUCCH resource or from the start of the first PUCCH resource after the used resource. For example, in some embodiments, if PUCCH periodicity is one slot and the UE 105 uses the PUCCH in slot 0 to transmit a UE-initiated beam report, for $M$ = 2, the PUCCH occasions in slot 1,2 may be skipped. The value of $M$ or properties of the time window may be configured by the network node 110 according to the UE capability. Such embodiments may be useful in an environment where the properties of the best beams do not change rapidly in time and where a small periodicity of PUCCH is configured to provide (e.g., to ensure) low report latency.

In some embodiments, an indication of the unused PUCCH occasions may be carried in the latest transmitted PUCCH carrying the UE-initiated beam-management report. For example, in some embodiments, a bitmap may be used to indicate whether the future PUCCH occasions are used or not. The size of the bitmap may be fixed, and referred to as N (e.g., N may be provided by higher layer signaling or predefined). In some embodiments, the bitmap may be applicable to N consecutive and valid PUCCH, starting from the end of the PUCCH carrying the indication. In some embodiments, the first MSB may correspond to the first valid PUCCH occasion after the PUCCH carrying the indication, the second MSB may correspond to the second valid PUCCH occasion after the PUCCH carrying the indication, and so on.

In some embodiments, a valid PUCCH occasion may be defined as a PUCCH that does not collide with one or more DL symbols indicated by *tdd-UL-DL-ConfigurationCommon* or *tdd-UL-DL-ConfigurationDedicated* or SSB.

In some embodiments, the PUCCH occasion indicated, by the UE 105 as being unused may not be indicated as being anything other than an unused PUCCH occasion. In other words, in some embodiments, if the UE 105 indicates that a particular PUCCH occasion is unused, the UE may also indicate that the particular PUCCH occasion is to remain unused.

In some embodiments, a bitmap indication may be carried in each transmitted PUCCH occasion. Additionally, in some embodiments, the bitmap indication may be carried in UCI part 1 because its size may be fixed, and it may always be present.

In some embodiments, the bitmap may be carried in the second UCI part (e.g., in UCI part 2) with potential indication in the UCI part indicating whether the bitmap is present or not. This solution may be beneficial because it may enable the UE 105 to not carry the bitmap if the UE 105 cannot provide useful information to the network node 110. In other words, if the UE 105 cannot predict the future unused PUCCH occasions, then it may be beneficial not to include the bitmap. In such embodiments, a single bit in the UCI part 1 may indicate whether the bitmap is present or absent.

In some embodiments, joint indication of skipped and/or used occasions and UCI report size may be provided.

In some embodiments, if the SR PUCCH or a newly defined, dedicated PUCCH (still referred to as the SR PUCCH in the sequel) is used to indicate to the network node 110 the used or skipped future UE-initiated beam report PUCCH occasion, the UE 105 may additionally indicate to the network node 110 in the SR PUCCH, the information related to the size of payload for the UE-initiated beam report PUCCH occasions. For example, in some embodiments, the UE 105 may indicate, in the SR PUCCH, the event that is triggered and initiated the beam report. In some embodiments, there may be a one-to-one mapping between an event (e.g., the type of event) and the report payload size. For example, some types of triggering events may result in larger report payload sizes.

In some embodiments, because the amount of information needed to be transmitted in the SR PUCCH may be larger than two bits, a new dedicated PUCCH may be configured for the UE 105 via RRC to convey the aforementioned information (e.g., the used or skipped future UE-initiated beam report PUCCH occasion and the information related to the size of payload for the UE-initiated beam report PUCCH occasions) to the network node 110. In some embodiments, the payload for such a PUCCH format may include (i) an indication of used or skipped PUCCH occasions (1 bit) and (ii) the information related to the size of the UE-initiated beam report.

In some embodiments, the methods discussed in this subsection may be applied to periodic PUSCH resources (e.g., Type-1 or Type-2 configured grant (CG) PUSCH).

### D. Using PUSCH as a Container

In some embodiments, PUSCH (e.g., dynamic PUSCH or CG PUSCH) may be used to carry the reports discussed above. For example, the UE 105 may use a CG PUSCH occasion to carry a MAC-CE or piggybacked UCI that includes the report as configured by the network node 110. To determine which CG PUSCH may be used, the network node 110 may indicate to the UE 105 a CG PUSCH index as part of CSI report configurations. In some embodiments, the legacy timelines may be satisfied, except for the earliest CG PUSCH occasions that follow the transmission of the associated RSs.

### E. Using RRC as a Container

In some embodiments, similar to the methods discussed above, RRC may carry the indicated reports. Indicating deterioration in the currently used beam is equivalent to indicating that the currently used TCI state is not good enough (e.g., not good enough for suitable transmission and/or communication).

In some embodiments, different combinations of the channels discussed above (e.g., PUSCH and PUCCH) may be used to carry the UE-initiated beam-management report. For example, the UE 105 may transmit SR to obtain dynamic PUSCH to carry the UE-initiated beam-management report. In some embodiments, the UE 105 may transmit PUCCH to indicate that an occasion of CG PUSCH type 2 or another periodic/semi-persistent PUCCH is used to carry the UE-initiated beam-management report.

In some embodiments, assuming that the network node 110 does not transmit RSs for assessing the currently used beam and the potential candidate beams, or the network node 110 transmits RSs for assessing the currently used beams, but not for assessing the potential candidate beams, which may be applicable to Method 2 (see FIG. 4), the network node 110 may transmit RSs to assess the quality of the currently used beam or for identifying the candidate beam. Therefore, any of the following containers may be used to carry any of the requests (e.g., reports) to the network node 110.

In some embodiments, the network node 110 may provide the UE 105 with single or multiple *CSI-ReportConfig* with *reportQuantity* set to new reporting quantities: UE-initiated-report, UE-initiated-report-preferredTCI, UE-initiated-report-cri-RSRP, UE-initiated-report-ssb-RSRP, and/or the like. In some embodiments, and unlike with legacy operation, some or all of the RSs associated with the report may not be transmitted. For example, in some embodiments, the network node 110 may not transmit the RSs associated with the currently used beam and the candidate beams. In some embodiments, the network node 110 may transmit the RSs associated with the currently used beam and the candidate beams, which may keep changing as the currently used beam changes. The currently used beam may be the beam indicated by the unified TCI state framework.

In some embodiments, legacy CSI report configurations on PUCCH or PUSCH may be used based on the understanding (e.g., between the UE 105 and the network node 110) that the UE 105 may use the PUCCH or PUSCH occasion when the triggering conditions are satisfied. Based on the triggering conditions being satisfied, the UE 105 may transmit a request to the network node 110 to cause the network node 110 to start transmitting the RSs.

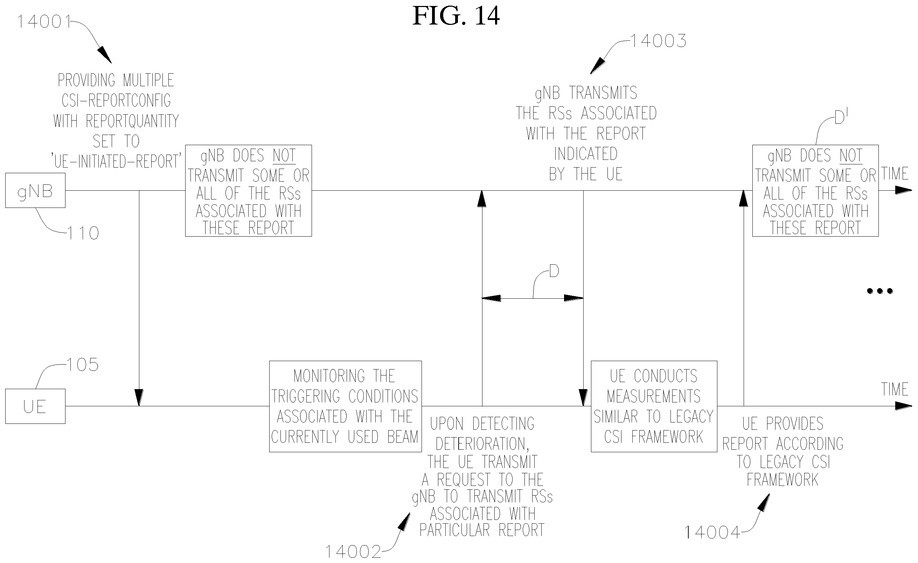

FIG. 14 is a diagram depicting CSI report configurations for Method 2, according to some embodiments of the present disclosure.

Referring to FIG. 14, in some embodiments, the network node 110 may configure a CSI report on a PUCCH or a PUSCH that is associated with a periodic RS or with a semi-persistent RS, and with report quantity set to UE-initiated reporting (operation 14001). The RSs associated with the report may be transmitted, by the network node 110, after the transmission of the request by the UE 105 (operation 14002). The RSs may be transmitted in their first occasion after the transmission of the request by the UE 105 (operation 14003). To provide the network node 110 with some time to receive the request from the UE 105 and avoid unnecessary monitoring by the UE 105, the resumption of RSs transmission (e.g., RS transmissions) may occur after a certain duration D. In some embodiments, the duration D may be predefined (e.g., provided in the 3GPP specification), configured by higher layers signaling from the network node 110 to the UE 105, or indicated via UE capability signaling.

In some embodiments, the timeline associated with the RSs type may be applied after the transmission of the request by the UE 105 (operation 14002). For example, in some embodiments, if the report is associated with semi-persistent RSs, the UE 105 may resume monitoring the RSs in slot $n + 3N_{slot}^{subframe,\mu}$, where $n$ is the slot in which the UE 105 transmits its request and $\mu$ may be the SCS for the request transmission (e.g., for the transmission of the request from the UE 105) or for the RSs transmission. In some embodiments, the UE 105 may not expect that the RSs are transmitted before the UE 105 transmits its request. After single or multiple cycles of RSs transmission and the corresponding report (e.g., after another duration D') (operation 14004), the network node 110 may stop transmitting the RSs and/or the UE 105 may stop transmitting reports unless the triggering conditions are satisfied. This duration D' may occur just after reception, by the network node 110, of the $n^{th}$ report from the UE 105, where $n$ being equal to 1 refers to the first report after RSs transmission, where $n$ being equal to 2 refers the second report after RSs transmission, and so on. In some embodiments, the value of $n$ may be predefined (e.g., may be provided in the 3GPP specification), configured by higher layers signaling, or indicated via UE capability signaling. In some embodiments, the duration D' may correspond to (e.g., may be) a certain window, configured by higher layers signaling (e.g., by RRC). In some embodiments, the duration D' may be a predefined duration (e.g., may be provided in the 3GPP specification).

In terms of what is reported, by the UE 105 to the network node 110, when the triggering conditions are satisfied, in some embodiments, the report may be a single bit indicating that the UE 105 is requesting the network node 110 to transmit RSs associated with the report. In some embodiments, reporting configurations may not be shared across different *CSI-ReportConfig*. In such embodiments, the network node 110 may determine the RSs associated with which CSI-ReportConfig to be transmitted.

In some embodiments, to reduce the decoding overhead at the network node 110, the reporting configurations may be shared across different *CSI-ReportConfig*. In such embodiments, the UE 105 may report additional information such as the required *reportConfigId, CSI ResourceConfigId,* nzp-*CSI-ResourceSetId*, *nzp-CSI-RS-ResourceId*, CSI-AperiodicTriggerState, *CSI-SemiPersistentOnPUSCH-TriggerState*, or the like.

For example, in some embodiments, the reporting on UCI or MAC-CE may be similar to the report depicted as Table 4 below. For example, the UE 105 may indicate 4 *reportConfigId* to the network node 110. In some embodiments, a bitmap may be used and its width may be equal to the number of configured *CSI-ReportConfig,* where the first MSB may be mapped to the *CSI-ReprotConfig* with the lowest ID, the second MSB may be mapped to the *CSI-ReprotConfig* with the second lowest Id, and so on. For example, the bits that are set to one may indicate which *CSI-ReportConfig* is requested by the UE 105.

In some embodiments, to reduce the reporting overhead, because not all *CSI-ReprotConfig* may have *reportQuantity* set to UE-initiated-report, the procedures discussed above may be applied only to the *CSI-ReportConfig* that have *reportQuantity* set to UE-initiated-report, or the like.

Table 4: Report format for indicating the requested *reportConfigId*:

| *reportConfigId #1* |
|---|
| *reportConfigId #2* |
| *reportConfigId #3* |
| *reportConfigId #4* |

In some embodiments, CFRA and SR may be associated with the *reportConfigId, CSI ResourceConfigId, nzp-CSI ResourceSetId, nzp-CSI-RS-ResourceId,* CSI-AperiodicTriggerState, *CSI-SemiPersistentOnPUSCH-TriggerState,* or the like. In some embodiments, the procedures discussed above for associating CFRA and SR with TCI-states or RSs may be extended to this case. For example, as part of *CSI-ReportConfig,* the network node 110 may configure the RO index or preamble index that the UE 105 may use for requesting the network node 110 to transmit the RSs associated with the *CSI-ReportConfig.* Similarly, as part of *CSI-ReportConfig,* the network node 110 may configure *SchedulingRequestId-beamDegradation* pointing to particular scheduling request configuration that the UE 105 may use for requesting the network node to transmit the RSs associated with this *CSI-ReportConfig.*

In some embodiments, periodic and semi-persistent RSs may be transmitted by the network node 110, but may be transmitted infrequently, which may prevent the UE 105 from accurately assessing the currently used beam or the candidate beams. To address this issue, the network node 110 may configure such periodic and semi-persistent RSs to have a periodicity of two or more (e.g., to recur two or more times). In the initial phase, the RSs may be transmitted infrequently. Once the UE 105 determines that the current serving beam has degraded, the UE 105 may request, from the network node 110, to use another periodicity such that RSs are transmitted more frequently. The same notion may be applied to the periodicity of reporting configurations. In some embodiments, the reporting techniques and associations discussed above may be extended to enable the UE 105 to indicate the preferred periodicity when the triggering conditions are satisfied.

In some embodiments, the request from the UE 105 may include corresponding triggering information of configured DL RS resources for the UE-initiated beam management (e.g., reporting) purpose, where upon reception of the request at the network node 110, the DL resources may be transmitted without legacy DCI transmission in order to trigger transmission of such DL resources.

In some embodiments, a new RRC configuration may be introduced as a measurement configuration for a report that configures a list of all DL RSs belonging to the serving cell that can be measured for derivation of UE-initiated reports (e.g. a similar concept to CSI-MeasConfig). This information element (IE) may also include trigger states for dynamically selecting one or more aperiodic configurations and/or for triggering one or more aperiodic DL resource sets for measurement. In some embodiments, the trigger states (e.g., triggering conditions) may be included in a UE request for DL transmission, implicitly indicating to the network node 110 that a specific measurement configuration may be used at the UE 105 for UE-initiated reporting.

In some embodiments, for Method 1 and Method 2 (discussed above), the request (e.g., the report) may be transmitted in other CCs than the one in which the beam quality degradation is detected. The network node 110 may indicate to the UE 105 which cell may be used for transmitting such request (report). For example, the network node 110 may use a higher layer to indicate the cell ID at which the request (e.g., the report) is to be transmitted. In cross CC scenarios, the UEI reporting may additionally include the Cell Id (e.g., the Cell ID) in which the event has been triggered (e.g., in which the triggering event has occurred).

In some embodiments, for the request (e.g., the report) transmitted in the cell in which beam deterioration is not detected, and assuming that this cell uses a unified TCI state framework, the UE 105 may use the beam indicated by the unified TCI state framework to transmit the request (e.g., the report) of the other cell.

In some embodiments, for the request (e.g., the report) transmitted in the same cell in which beam deterioration is detected, the UE 105 may use one of the preferred TCI states (or beams) carried in the request (e.g., the report) to transmit the request (e.g., the report).

**F. Defining Priority for a Container**

In some embodiments, the container of a request (e.g., a report) may collide with other UL channels (e.g., with other signals) overlapping with the container in the time domain. It may be beneficial to define the UE behavior in this case. In some embodiments, any combination of the following definitions for UE behavior may be applied.

In some embodiments, the network node 110 may indicate the priority level (e.g., a low priority level or a high priority level) for a container as part of the associated configurations (e.g., via higher layer signaling). In some embodiments, the container may have predefined priority (e.g., the priority may be provided in the 3GPP specification). In some embodiments, the container may be a high level to prioritize detecting the degradation in the beam quality over other UL channels (e.g., other signals).

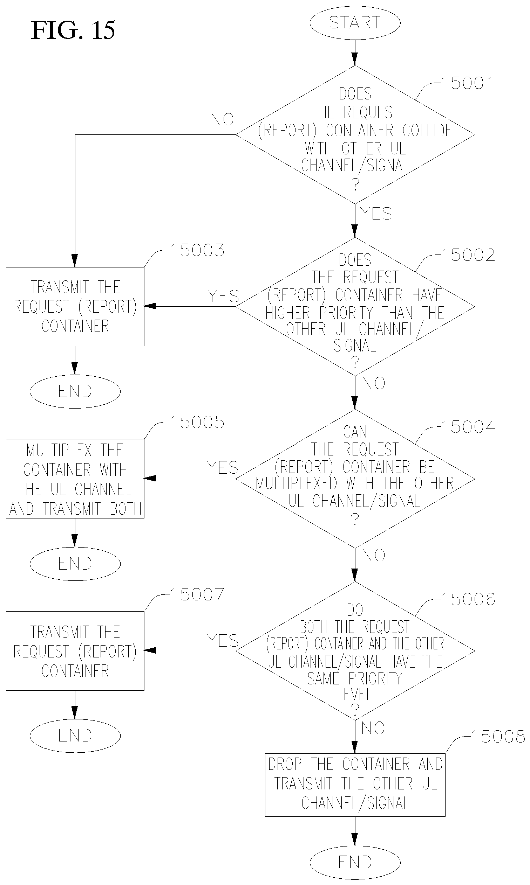

FIG. 15 is a flow chart depicting a method for handling a collision between a container carrying a request (e.g., a report) and another UL channel (e.g., signal), according to some embodiments of the present disclosure.

Referring to FIG. 15, in some embodiments, the network node 110 may determine whether the request collides with another UL channel (e.g., another UL signal) (operation 15001). If the container has a higher priority than the other channel, the UE 105 may drop the other channel and may transmit the request (e.g., the report) container (operation 15003). If the request (e.g., the report) container has the same or less priority level than the other UL channel (e.g., signal) and if the container can be multiplexed with the other UL channel (e.g., signal) (operation 15004), then the UE 105 may multiplex the request (e.g., the report) container with the other UL channel (e.g., signal) (operation 15005). Otherwise, if multiplexing cannot occur, but the request (e.g., the report) container has the same priority level as the other UL channel (e.g., signal) (operation 15005), the UE 105 may prioritize the transmission of container carrying the request (report) (operation 15007). Otherwise, if the container has lower priority (operation 15006) and cannot be multiplexed with the other UL channel/signal), the container carrying the request (report) may be dropped and the other UL channel (e.g., signal) may be transmitted (operation 15008).

**G. Priority Rule for CSI Multiplexing**

In some embodiments, the container carrying the request (e.g., the report) may be treated as a CSI report, but the network node 110 may not know (e.g., may not have information regarding) when the UE 105 may transmit the request. To address this issue, in some embodiments, a priority rule for CSI multiplexing may be defined, where the container (e.g., a container carried by UCI) is to be multiplexed with other CSI reports.

In some embodiments, a legacy equation for determining the priority of the report may be used. In some embodiments, to provide a higher priority to the container carrying the request, a legacy CSI reporting equation may be used and set such that the container is treated as an aperiodic CSI report (e.g., with y in the equation below set to 0) carrying L1-RSRP and L1-SINR, with k in the equation below set to 0. Such a method may be beneficial because it provides a higher priority to the container carrying the request (e.g., the report).

For example, the priority value may be defined by the legacy CSI reporting equation $Pri_{CSI}(y, k, c, s) = 2N_{cells}M_s y + N_{cells}M_s k + M_s c + s$, where $c$ refers to the serving cell index, $N_{cells}$ refers to the maximum number of serving cells (e.g., the value of higher layer parameter *maxNrofServingCells*), $s$ refers to the ID of a calibration-assisting report configuration, $M_s$ refers to the maximum number of calibration-assisting report configurations, $k$ refers to the priority of reports carrying L1-RSRP or L1-SINR, which for UE-initiated reporting may be zero ($k = 0$), and y refers to the priority of reporting based on a time characteristic of the report. For example, $y = 0$ refers to aperiodic reporting, $y = 1$ refers to semi-persistent reporting on PUSCH, $y = 2$ refers to semi-persistent reporting on PUCCH, and $y = 3$ refers to periodic reporting on PUCCH. However, for UE-initiated reporting, y may be set to zero (e.g., $y = 0$). Therefore, in such embodiments, the priority value may be calculated as $M_s c + s$. That is, the priority value may be based the product of the maximum number of calibration-assisting report configurations, the serving cell index, and the ID (e.g., an identifier) of a calibration-assisting report configuration.

In some embodiments, the network node 110 may configure the value of "y" or the value of "k" to have more flexibility than setting the values of y and k to zero. For example, in some embodiments, the container carrying the request (e.g., the report) may be treated as another CSI reporting type. For example, the container may be treated as semi-persistent CSI reporting on PUCCH or PUSCH, may be treated as periodic reporting on PUCCH, or the like.

In some embodiments, a new priority rule may be defined specifically for UE-initiated reporting while the priority of such reporting compared to CSI reporting may be semi-statically configured, dynamically indicated, and/or determined based on a pre-determined rule. In some embodiments, the pre-determined rule may indicate that UE-initiated reporting has a higher priority when compared to CSI reporting.

**H. Selecting Whether Multiplexing May Occur on Dynamic PUSCH or CG PUSCH**

In some embodiments, the network node 110 may not know (e.g., may not have information regarding) whether the UE 105 intends to transmit the container carrying the request (e.g., the report). Therefore, when the container carrying the request is multiplexed with PUSCH, the blind decoding efforts may be increased at the network node 110 side. To address this issue, the network node 110 may indicate to the UE 105 whether the container can be multiplexed on dynamic PUSCH and/or multiplexed on CG PUSCH. The indication may be provided via higher layers signaling (e.g., RRC). In some embodiments, a predefined rule may be applied (e.g., the rule may be provided in the 3GPP specification).

In some embodiments, the network node 110 may indicate to the UE which PUSCH may be used for multiplexing when the container carrying the request (e.g., the report) is present and collides with the PUSCH. In some embodiments, the network node may indicate the time pattern in which multiplexing may occur. For example, the network node 110 may configure periodicity and duration for each period where multiplexing between the container and the other PUSCH may occur.

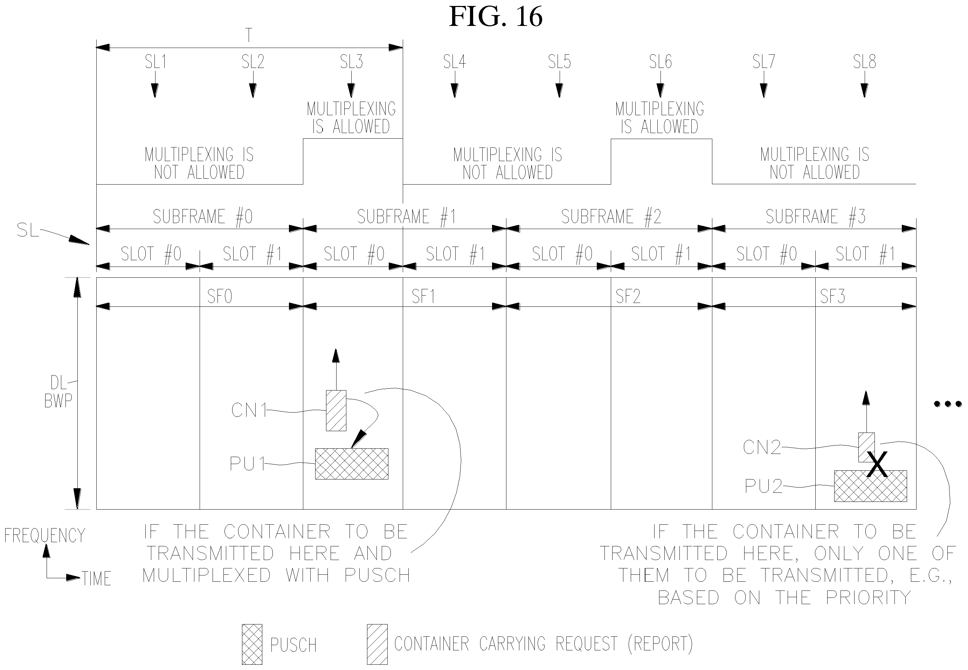

FIG. 16 is a diagram depicting an example of configuring a window indicating when multiplexing PUSCH and container carrying a request (e.g., a report) from the UE is allowed, according to some embodiments of the present disclosure.

Referring to FIG. 16, an example where a periodicity T is equal to three slots SL and multiplexing is allowed only in one slot (e.g., one slot SL per period T, such as SL3 and SL6). The container CN1 to be transmitted in Slot #0 (e.g., SL3) in Subframe #1 (SF1), overlaps with a PUSCH (PU1) in the time domain and both the container CN1 and the PUSCH (PU1) fall within the window in which multiplexing is allowed. Therefore, the UE 105 may multiplex the container CN1 in the PUSCH (PU1). On the other hand, for the container CN2 to be transmitted in Slot #1 (e.g., SL8) in Subframe #3 (SF3), multiplexing may not be allowed. Therefore, other priority-determination rules similar to the priority-determination rules discussed above may be applied to determine which one, between the container CN2 and the PUSCH (PU2), is to be transmitted and which is to be dropped when multiplexing is not allowed in a given slot SL.

Although the method discussed in this subsection is for PUSCH colliding with the container carrying the UE request (e.g., the report), the present disclosure is not limited thereto. For example, the method may be applied to PUCCH as well.

## IV. Receiving a Response from the Network Node

In Method 1, in which the network node 110 transmits RSs for assessing the currently used beams and the candidate beams, any of the following methods may be applied after the transmission, by the UE 105, of the container carrying the request (e.g., the report) to the network node 110.

In some embodiments, after the UE 105 indicates the preferred TCI state (or beam) as discussed, or using any other procedure, and after a certain duration t (and, in some embodiments, after one or more additional conditions) the UE 105 may apply the indicated preferred TCI state for receiving or transmitting the subsequent DL receptions and UL transmission, respectively, which may be beneficial when the unified TCI-state framework is used. The duration t may be configured by higher layers signaling (e.g., RRC), may be predefined (e.g., provided by a standard), indicated to the network node 110 via UE capability signaling, or may be equal to other parameters, such as: *timeDurationForQCL,* beam-application time of the unified TCI state framework, or the like. The duration t may start after (e.g., immediately after) the container transmission, or may start after a certain gap.

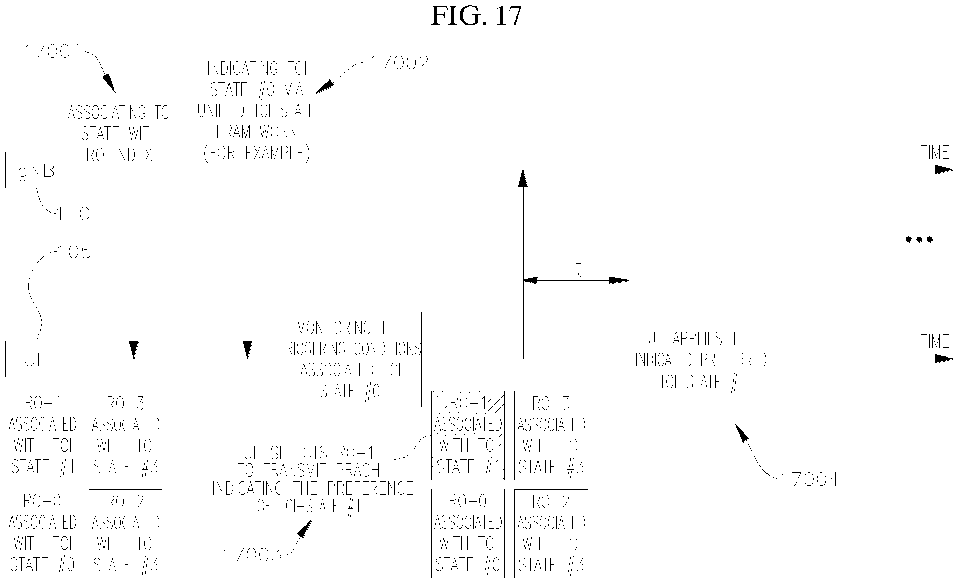

FIG. 17 is a diagram depicting an example of using CFRA, as discussed above, for indicating the preferred TCI-state, according to some embodiments of the present disclosure.

Referring to FIG. 17, in some embodiments, the network node 110 may associate TCI states with RO indices (operation 17001). The network node 110 may indicate TCI state #0 (e.g., via a unified TCI state framework) as the current beam (operation 17002). The UE 105 may monitor for triggering conditions associated with TCI state #0 and may select RO-1, associated with TCI state #1, to transmit PRACH indicating the preference of TCI state #1 based on a triggering event occurring (operation 17003). After the duration *t,* the UE 105 may apply the preferred TCI state (e.g., TCI state #1) for the DL receptions and UL transmissions (operation 17004).

In some embodiments, as discussed above, the UE 105 may apply the indicated preferred TCI state for receiving or transmitting the subsequent DL receptions and UL transmissions after one or more additional condition. In some embodiments, the one or more additional conditions may be in the form of explicit ACK/NACK transmitted from the network node 110 to the UE 105. The ACK/NACK may be transmitted via DCI carried in PDCCH whose CRC is scrambled by cell-radio network temporary identifier (C-RNTI) or any other RNTI. In some embodiments, the ACK/NACK may be a one-bit field in the DCI. In some embodiments, a dedicated search space may be configured for monitoring such PDCCH after the UE 105 transmits the container carrying the request (e.g., the report). For example, the dedicated search space may be configured via RACH (e.g., via CFRA RACH). Once the ACK is received or decoded (for decoding PDCCH carrying ACK), by the UE 105, the duration t may be terminated, and the UE 105 may apply the preferred TCI state (e.g., TCI state #1 in the example of FIG. 17). If NACK is received, the UE 105 may remain using the old (e.g., the previous) TCI state (e.g., TCI state #0 in the example of FIG. 17).

If the duration *t* expires without the UE 105 receiving any response from the network node 110, the UE 105 may assume that it is to revert back to the previous TCI state. In some embodiments, when duration *t* expires without the UE 105 receiving any response from the network node 110, the UE 105 may apply the new indicated preferred beam. For example, such a method may be effectively equivalent to the network node 110 only transmitting NACK within the duration $t$) and ACK being assumed at the end of duration $t$ if NACK is not transmitted by the network node 110 (or received by the UE 105).

In some embodiments, after the duration $t$ the UE 105 may monitor the explicit ACK/NACK, assuming the new TCI is applied based on the preferred TCI state indicated by the UE 105. As discussed above, a dedicated search space may be used for this purpose. The UE 105 may monitor the dedicated search space after the duration $t$. If ACK is received by the UE 105, the UE 105 may continue using the indicated preferred TCI state. If NACK is indicated, the UE 105 may revert back to the previous TCI state.

In some embodiments, implicit ACK may be used, in which case the UE 105 may wait for receiving PDCCH activating one of the indicated preferred TCI-states or receiving MAC-CE activating a different set of the TCI states.

In some embodiments, the implicit ACK may be in the form of receiving any transmission from the network node 110 using the indicated preferred TCI state. For example, the UE 105 may apply the indicated preferred TCI state and may wait to receive a DL transmission from the network node 110 using the preferred TCI state (e.g., the DL transmission may include a scheduling PDCCH). In some embodiments, when the UE 105 receives explicit or implicit ACK, the UE 105 may assume that the procedure is completed successfully.

In Method 2, in which the network node 110 does not transmit RSs for assessing the currently used beam and the candidate beams, or the network node 110 transmits RSs for assessing the currently used beams, but not for the candidate beams, the network node 110 may transmit RSs to assess the quality of the currently used beam or for identifying the candidate beam. In some embodiments, as a response to the UE request (report), the network node 110 may transmit RSs associated with *reportConfigId, CSI-ResourceConfigId,* nzp-*CSI-ResourceSetId,* nzp-*CSI-RS-ResourceId,* CSI-AperiodicTriggerState, *CSI SemiPersistentOnPUSCH-TriggerState,* or the like, as indicated by the request (e.g., the report), sent by the UE 105, as discussed above, or using any other suitable procedure. In such embodiments, the UE 105 may assume that the procedure is completed successfully based on receiving such RSs from the network node 110.

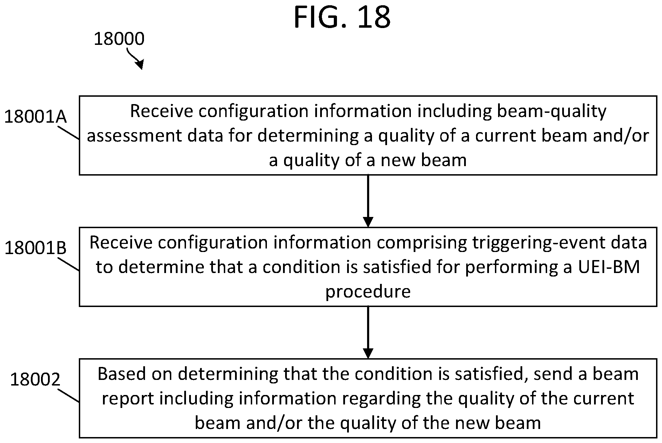

FIG. 18 is a flowchart depicting a method for performing a UE-initiated beam-management procedure, according to some embodiments of the present disclosure.

Referring to FIG. 18, a method 18000 for performing UE-initiated BM may include one or more of the following operations. A UE 105 may receive configuration information (operation 18001, including operations 18001A and 18001B). The configuration information may include (i) beam-quality-assessment data for the UE 105 to determine a quality of a current beam or a quality of a new beam (operation 18001A) and (ii) triggering-event data, for the UE 105 to determine that a condition is satisfied for performing a UE-initiated BM procedure (e.g., a next operation of a UEI BM procedure) (operation 18001B). Based on determining, by the UE 105, that the condition is satisfied, the UE 105 may send a beam report including information regarding the quality of the current beam and/or the quality of the new beam (operation 18002).

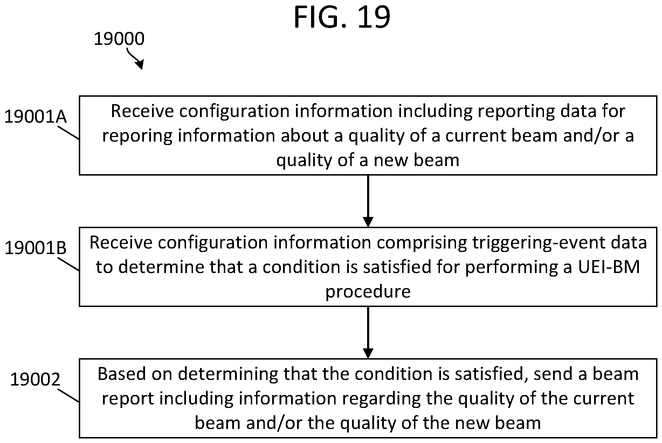

FIG. 19 is a flowchart depicting a method for performing a UE-initiated beam-management procedure, according to some embodiments of the present disclosure.

Referring to FIG. 19, a method 19000 for performing UE-initiated BM may include one or more of the following operations. A UE 105 may receive configuration information (operation 19001, including operations 19001A and 19001B). The configuration information may include (i) reporting data, for the UE 105 to report information about a quality of a current beam or a quality of a new beam (operation 19001A) and (ii) triggering-event data, for the UE 105 to determine that a condition is satisfied for performing a UE-initiated BM procedure (e.g., a next operation of a UEI BM procedure) (operation 19001B). Based on determining, by the UE 105, that the condition is satisfied, the UE may send a beam report including information regarding the quality of the current beam and/or the quality of the new beam (operation 19002).

FIG. 20 is a block diagram of an electronic device in a network environment, according to some embodiments of the present disclosure.

Referring to FIG. 20, an electronic device 2001 in a network environment 2000 may communicate with an electronic device 2002 via a first network 2098 (e.g., a short-range wireless communication network), or with an electronic device 2004 or a server 2008 via a second network 2099 (e.g., a long-range wireless communication network). The electronic device 2001 may communicate with the electronic device 2004 via the server 2008. The electronic device 2001 may include a processor 2020, a memory 2030, an input device 2050, a sound output device 2055, a display device 2060, an audio module 2070, a sensor module 2076, an interface 2077, a haptic module 2079, a camera module 2080, a power management module 2088, a battery 2089, a communication module 2090, a subscriber identification module (SIM) card 2096, and/or an antenna module 2097. In one embodiment, at least one of the components (e.g., the display device 2060 or the camera module 2080) may be omitted from the electronic device 2001, or one or more other components may be added to the electronic device 2001. Some of the components may be implemented as a single integrated circuit (IC). For example, the sensor module 2076 (e.g., a fingerprint sensor, an iris sensor, or an illuminance sensor) may be embedded in the display device 2060 (e.g., a display).

The processor 2020 may execute software (e.g., a program 2040) to control at least one other component (e.g., a hardware or a software component) of the electronic device 2001 coupled to the processor 2020, and may perform various data processing or computations.

As at least part of the data processing or computations, the processor 2020 may load a command or data received from another component (e.g., the sensor module 2076 or the communication module 2090) in volatile memory 2032, may process the command or the data stored in the volatile memory 2032, and may store resulting data in non-volatile memory 2034. The processor 2020 may include a main processor 2021 (e.g., a central processing unit or an application processor (AP)), and an auxiliary processor 2023 (e.g., a graphics processing unit (GPU), an image signal processor (ISP), a sensor hub processor, or a communication processor (CP)) that is operable independently from, or in conjunction with, the main processor 2021. Additionally or alternatively, the auxiliary processor 2023 may be adapted to consume less power than the main processor 2021, or to execute a particular function. The auxiliary processor 2023 may be implemented as being separate from, or a part of, the main processor 2021.

The auxiliary processor 2023 may control at least some of the functions or states related to at least one component (e.g., the display device 2060, the sensor module 2076, or the communication module 2090), as opposed to the main processor 2021 while the main processor 2021 is in an inactive (e.g., sleep) state, or together with the main processor 2021 while the main processor 2021 is in an active state (e.g., executing an application). The auxiliary processor 2023 (e.g., an image signal processor or a communication processor) may be implemented as part of another component (e.g., the camera module 2080 or the communication module 2090) functionally related to the auxiliary processor 2023.

The memory 2030 may store various data used by at least one component (e.g., the processor 2020 or the sensor module 2076) of the electronic device 2001. The various data may include, for example, software (e.g., the program 2040) and input data or output data for a command related thereto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input device 2050 may receive a command or data to be used by another component (e.g., the processor 2020) of the electronic device 2001, from the outside (e.g., a user) of the electronic device 2001. The input device 2050 may include, for example, a microphone, a mouse, or a keyboard.

The sound output device 2055 may output sound signals to the outside of the electronic device 2001. The sound output device 2055 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 2060 may visually provide information to the outside (e.g., to a user) of the electronic device 2001. The display device 2060 may include, for example, a display, a hologram device, or a projector, and may include control circuitry to control a corresponding one of the display, hologram device, and projector. The display device 2060 may include touch circuitry adapted to detect a touch, or may include sensor circuitry (e.g., a pressure sensor) adapted to measure the intensity of force incurred by the touch.

The audio module 2070 may convert a sound into an electrical signal and vice versa. The audio module 2070 may obtain the sound via the input device 2050 or may output the sound via the sound output device 2055 or a headphone of an external electronic device 2002 directly (e.g., wired) or wirelessly coupled to the electronic device 2001.

The sensor module 2076 may detect an operational state (e.g., power or temperature) of the electronic device 2001, or an environmental state (e.g., a state of a user) external to the electronic device 2001. The sensor module 2076 may then generate an electrical signal or data value corresponding to the detected state. The sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 2077 may support one or more specified protocols to be used for the electronic device 2001 to be coupled to the external electronic device 2002 directly (e.g., wired) or wirelessly. The interface 2077 may include, for example, a high-definition multimedia interface (HDMI), a universal serial bus (USB) interface, a secure digital (SD) card interface, or an audio interface.

A connecting terminal 2078 may include a connector via which the electronic device 2001 may be physically connected to the external electronic device 2002. The connecting terminal 2078 may include, for example, an HDMI connector, a USB connector, an SD card connector, or an audio connector (e.g., a headphone connector).

The haptic module 2079 may convert an electrical signal into a mechanical stimulus (e.g., a vibration or a movement) or an electrical stimulus, which may be recognized by a user via tactile sensation or kinesthetic sensation. The haptic module 2079 may include, for example, a motor, a piezoelectric element, or an electrical stimulator.

The camera module 2080 may capture a still image or moving images. The camera module 2080 may include one or more lenses, image sensors, image signal processors, or flashes. The power management module 2088 may manage power that is supplied to the electronic device 2001. The power management module 2088 may be implemented as at least part of, for example, a power management integrated circuit (PMIC).

The battery 2089 may supply power to at least one component of the electronic device 2001. The battery 2089 may include, for example, a primary cell that is not rechargeable, a secondary cell that is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008), and may support performing communication via the established communication channel. The communication module 2090 may include one or more communication processors that are operable independently from the processor 2020 (e.g., the AP), and may support a direct (e.g., wired) communication or a wireless communication. The communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as BLUETOOTHTM, wireless-fidelity (Wi-Fi) direct, or a standard of the Infrared Data Association (IrDA)), or via the second network 2099 (e.g., a long-range communication network, such as a cellular network, the Internet, or a computer network (e.g., LAN or wide area network (WAN))). These various types of communication modules may be implemented as a single component (e.g., a single IC), or may be implemented as multiple components (e.g., multiple ICs) that are separate from each other. The wireless communication module 2092 may identify and authenticate the electronic device 2001 in a communication network, such as the first network 2098 or the second network 2099, using subscriber information (e.g., international mobile subscriber identity (IMSI)) stored in the subscriber identification module 2096.

The antenna module 2097 may transmit or receive a signal or power to or from the outside (e.g., the external electronic device) of the electronic device 2001. The antenna module 2097 may include one or more antennas. The communication module 2090 (e.g., the wireless communication module 2092) may select at least one of the one or more antennas appropriate for a communication scheme used in the communication network, such as the first network 2098 or the second network 2099. The signal or the power may then be transmitted or received between the communication module 2090 and the external electronic device via the selected at least one antenna.

Commands or data may be transmitted or received between the electronic device 2001 and the external electronic device 2004 via the server 2008 coupled to the second network 2099. Each of the electronic devices 2002 and 2004 may be a device of a same type as, or a different type, from the electronic device 2001. All or some of operations to be executed at the electronic device 2001 may be executed at one or more of the external electronic devices 2002, 2004, or 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 2001. The electronic device 2001 may provide the outcome, with or without further processing of the outcome, as at least part of a reply to the request. To that end, cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination (e.g., sub combination). Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method comprising:

   receiving, by a user equipment, UE, configuration information comprising:

   reporting data, for the UE to report information about a quality of a current beam and/or a quality of a new beam; and
   triggering-event data, for the UE to determine that a condition is satisfied for performing a UE-initiated, UEI, beam-management, BM, procedure; and

   based on determining, by the UE, that the condition is satisfied, sending a beam report comprising information regarding the quality of the current beam and/or the quality of the new beam.

2. The method of claim 1, further comprising:

   determining, by the UE, that a first beam is the current beam; and/or
   determining, by the UE, that a second beam is the new beam.

3. The method of claim 1 or 2, wherein the determining that the condition is satisfied comprises comparing a characteristic of the current beam with a characteristic of the new beam.

4. The method of any one of claims 1 to 3, wherein the beam report is associated with a periodic reference signal, RS, such as a synchronization signal block, SSB, or a periodic channel state information RS, P-CSI-RS.

5. The method of any one of claims 1 to 4, wherein the beam report comprises a measurement of a Layer 1 reference signal received power, L1-RSRP, and a corresponding reference signal, RS, identifier.

6. The method of any one of claims 1 to 5, wherein the beam report comprises:

   an absolute reference signal received power, RSRP, for a best beam among a plurality of beams comprising the current beam and the new beam, the best beam having a largest measured RSRP among reported RSRP measurements associated with the plurality of beams; and
   one or more differential RSRP measurements for remaining beams of the plurality of beams, the remaining beams including the current beam, the one or more differential RSRP measurements being calculated based on a difference with the absolute RSRP for the best beam.

7. The method of any one of claims 1 to 6, further comprising transmitting, by the UE, a first UL channel as a schedule request, SR, to request an uplink, UL, grant for a second UL channel as a physical uplink shared channel, PUSCH, to carry the beam report, based on a deterioration in the quality of the current beam.

8.  The method of claim 7, wherein a network node links the SR to the current beam or to the new beam.

9.  The method of any one of claims 1 to 6, further comprising transmitting, by the UE, a first channel to notify a second channel to carry the beam report,

> wherein the first channel comprises a physical uplink shared channel, PUCCH, and
> wherein the second channel comprises an uplink, UL, channel.

10.  The method of claim 9, wherein the sending of the beam report comprises carrying the beam report on a configured grant physical uplink shared channel, CG PUSCH, or a configured PUCCH based on periodic CSI reporting.

11.  The method of claim 9 or 10, wherein the first channel and the second channel are separated in a time domain by a number of symbols.

12.  The method of any one of claims 9 to 11, wherein an occasion of CG-PUSCH or an occasion of PUCCH is used to send the beam report.

13.  The method of any one of claims 1 to 12, wherein the beam report comprises measurements of a number of reported beams from among a plurality of beams, the plurality of beams comprising the current beam and the new beam, the number of reported beams being configured by a radio resource control, RRC, protocol.

14.  The method of any one of claims 1 to 13, wherein the beam report comprises:

> a first part having a fixed payload; and
> a second part having a variable payload that is determined based on the contents of the first part.

15.  The method of any one of claims 1 to 14, further comprising indicating, by the UE:

> a number of beam measurements to be included in the beam report; and
> one or more events out of one or more configured events to be included in the beam report.

# FIG. 1

# FIG. 2

**FIG. 3**

3000

105    110

① 3001 — UE INDICATES TO gNB ITS CAPABILITY OF SUPPORTING UE INITIATED BEAM MANAGEMENT

② 3002 — gNB PROVIDES THE NECESSARY CONFIGURATIONS FOR ASSESING THE BEAM QUALITY, E.G., THE TRIGGERING CONDITIONS AND THE ASSOCIATED RSs, IF ANY, COFIGURATION TO TRANSMIT THE REPORT/INDICATION WHEN BEAMS QUALITY DETERIORATES

③ 3003 — gNB TRANSMITS RSs FOR ASSESING THE BEAM QUALITY

④ 3004 — UE MONITORS THE BEAMS QUALITY

⑤ 3005 — WHEN BEAMS QUALITY FALLS BELOW PARTICULAR LEVEL, THE UE TRANSMITS A REQUEST TO ADDRESS THIS SITUATION

⑥ 3006 — gNB TAKES THE NECESSARY ACTIONS

⑦ 3007 — gNB TRANSMITS AN EXPLICIT OR IMPLICIT INDICATION OF RECEPTION OF THE UE's REQUEST

⑧ 3008 — UE MONITORS gNB's RESPONSE

# FIG. 4

4000

105    110

① 4001 UE INDICATES TO gNB ITS CAPABILITY OF SUPPORTING UE INITIATED BEAM MANAGEMENT

② 4002 gNB PROVIDES THE NECESSARY CONFIGURATIONS FOR ASSESSING THE BEAM QUALITY, E.G., THE TRIGGERING CONDITIONS, IF ANY, COFIGURATION TO TRANSMIT THE REPORT/INDICATION WHEN BEAMS QUALITY DETERIORATES

③ 4003 UE MONITORS THE BEAMS QUALITY

④ 4004 WHEN BEAMS QUALITY FALLS BELOW PARTICULAR LEVEL, THE UE TRANSMITS A REQUEST FOR RS

⑤ 4005 gNB TAKES THE NECESSARY ACTIONS

⑥ 4006 gNB TRANSMITS RSs FOR ASSESING THE BEAM QUALITY

⑦ 4007 UE MONITORS THE TRANSMITTED RSs

⑧ 4008 UE TRANSMITS THE REQUESTED REPORTS

# FIG. 5

5000

105

110

5001 | UE RECEIVES BEAM MEASUREMENT AND REPORT CONFIGURATIONS FROM gNB

5002 | UE DETERMINES DL RECEPTION QUALITY

5003 | UE DETECTS CONDITIONS FOR DL IMPROVEMENT

5004 | UE DETERMINES SPECIFIC BM SCHEME

5005 | UE REQUESTS BM FROM gNB

5006 | gNB RESPONDS TO UE AND PERFORMS DL AND UL BM PROCEDURES

## FIG.6

CW — COUNTING WINDOW

RS

INS1  INS2  INS3

UE PROCEEDS TO THE NEXT STEPS IN THE PROCEDURE, E.G., TRANSMIT AN INDICATION TO THE gNB

TIME

INS ⟶

RS FOR DETECTING BEAM DETERIORATION

✓ INDICATES THAT THE TRIGGERING CONDITIONS ARE SATISFIED

X INDICATES THAT THE TRIGGERING CONDITIONS ARE NOT SATISFIED

## FIG.7

CW

CW1 — COUNTING WINDOW

CW2 — COUNTING WINDOW

CW3 — COUNTING WINDOW

CW4 — COUNTING WINDOW

RS

INS1  INS2  INS3  INS4

UE PROCEEDS TO THE NEXT STEPS IN THE PROCEDURE, E.G., TRANSMIT AN INDICATION TO THE gNB

TIME

RS FOR DETECTING BEAM DETERIORATION

✓ INDICATES THAT THE TRIGGERING CONDITIONS ARE SATISFIED

X INDICATES THAT THE TRIGGERING CONDITIONS ARE NOT SATISFIED

## FIG. 8

POSSIBLE REPORTING OCCASION
THAT UE MAY OR MAY NOT USE

POSSIBLE REPORTING OCCASION
THAT UE MAY OR MAY NOT USE

RS

80

80

TIME

D1  D2  D3  D

CPU
OCCUPATION

$Z'_3$  $Z'_3$  $Z'_3$

RS FOR DETECTING
BEAM DETERIORATION

CPU OCCUPIED DURATION

# FIG. 9

POSSIBLE REPORTING OCCASION
THAT UE MAY OR MAY NOT USE

PD1

RS→

80

TIME

CPU
OCCUPATION

D

▨ PDCCH TRIGGERING
UE-INITIATED-REPORT
FOR APERIODIC RS

▨ RS FOR DETECTING
BEAM DETERIORATION

▨ CPU OCCUPIED DURATION

EP 4 554 109 A1

# FIG. 10

# FIG. 11

11001 — ASSOCIATING TCI STATE WITH RO INDEX

11002 — INDICATING TCI STATE #0 VIA UNIFIED TCI STATE FRAMEWORK (FOR EXAMPLE)

11004 — INDICATING TCI STATE #1 VIA UNIFIED TCI STATE FRAMEWORK (FOR EXAMPLE)

TIME

gNB

110

105

UE

TC0   TC1

TIME

MONITORING THE TRIGGERING CONDITIONS ASSOCIATED TCI STATE #0

TC0   TC1

MONITORING THE TRIGGERING CONDITIONS ASSOCIATED TCI STATE #1

TC0   TC1

TIME

RO-1   RO-3

RO-0   RO-2

UE SELECTS RO-1 TO TRANSMIT PRACH WHEN QUALITY OF BEAM USED FOR TCI-STATE #0 DEGRADES

RO-1   RO-3

RO-0   RO-2

RO-1   RO-3

RO-0   RO-2

ASSOCIATED WITH TCI STATE #0

ASSOCIATED WITH TCI STATE #1

11003

UE SELECTS RO-2 TO TRANSMIT PRACH WHEN QUALITY OF BEAM USED FOR TCI-STATE #0 DEGRADES

11005

EP 4 554 109 A1

FIG. 12

12001

ASSOCIATING TCI
STATE WITH
RO INDEX

INDICATING TCI
STATE #0 VIA
UNIFIED TCI STATE
FRAMEWORK
(FOR EXAMPLE)

12002

INDICATING TCI
STATE #1 VIA
UNIFIED TCI STATE
FRAMEWORK
(FOR EXAMPLE)

TIME

gNB

110

105

UE

TC1   TC3

MONITORING THE
TRIGGERING CONDITIONS
ASSOCIATED TCI
STATE #0

12002

TC1   TC3

MONITORING THE
TRIGGERING CONDITIONS
ASSOCIATED TCI
STATE #1

TC1   TC3   TIME

RO-1
ASSOCIATED
WITH TCI
STATE #1

RO-3
ASSOCIATED
WITH TCI
STATE #3

RO-0
ASSOCIATED
WITH TCI
STATE #0

RO-2
ASSOCIATED
WITH TCI
STATE #3

UE SELECTS RO-1
TO TRANSMIT PRACH
INDICATING THE PREFERENCE
OF TCI-STATE #1

12003

RO-1
ASSOCIATED
WITH TCI
STATE #1

RO-3
ASSOCIATED
WITH TCI
STATE #3

RO-0
ASSOCIATED
WITH TCI
STATE #0

RO-2
ASSOCIATED
WITH TCI
STATE #3

RO-1
ASSOCIATED
WITH TCI
STATE #1

RO-3
ASSOCIATED
WITH TCI
STATE #3

RO-0
ASSOCIATED
WITH TCI
STATE #0

RO-2
ASSOCIATED
WITH TCI
STATE #3

UE SELECTS RO-2 TO TRANSMIT PRACH INDICATING
THE PREFERENCE OF TCI STATE #3

12004

EP 4 554 109 A1

# FIG. 13

## FIG. 14

14001

PROVIDING MULTIPLE
CSI—REPORTCONFIG
WITH REPORTQUANTITY
SET TO
'UE—INITIATED—REPORT'

gNB DOES NOT
TRANSMIT SOME OR
ALL OF THE RSs
ASSOCIATED WITH
THESE REPORT

14003

gNB TRANSMITS
THE RSs ASSOCIATED
WITH THE REPORT
INDICATED
BY THE UE

D'

gNB DOES NOT
TRANSMIT SOME OR
ALL OF THE RSs
ASSOCIATED WITH
THESE REPORT

gNB

110

D

UE

105

MONITORING THE
TRIGGERING CONDITIONS
ASSOCIATED WITH THE
CURRENTLY USED BEAM

UPON DETECTING
DETERIORATION,
THE UE TRANSMIT
A REQUEST TO THE
gNB TO TRANSMIT RSs
ASSOCIATED WITH
PARTICULAR REPORT

14002

UE CONDUCTS
MEASUREMENTS
SIMILAR TO LEGACY
CSI FRAMEWORK

UE PROVIDES
REPORT ACCORDING
TO LEGACY CSI
FRAMEWORK

14004

TIME

TIME

EP 4 554 109 A1

**FIG. 15**

START

DOES THE REQUEST (REPORT) CONTAINER COLLIDE WITH OTHER UL CHANNEL/SIGNAL ? ⟵15001

NO

YES

DOES THE REQUEST (REPORT) CONTAINER HAVE HIGHER PRIORITY THAN THE OTHER UL CHANNEL/SIGNAL ? ⟵15002

YES ⟶ TRANSMIT THE REQUEST (REPORT) CONTAINER ⟵15003

END

NO

CAN THE REQUEST (REPORT) CONTAINER BE MULTIPLEXED WITH THE OTHER UL CHANNEL/SIGNAL ? ⟵15004

YES ⟶ MULTIPLEX THE CONTAINER WITH THE UL CHANNEL AND TRANSMIT BOTH ⟵15005

END

NO

DO BOTH THE REQUEST (REPORT) CONTAINER AND THE OTHER UL CHANNEL/SIGNAL HAVE THE SAME PRIORITY LEVEL ? ⟵15006

YES ⟶ TRANSMIT THE REQUEST (REPORT) CONTAINER ⟵15007

END

NO

DROP THE CONTAINER AND TRANSMIT THE OTHER UL CHANNEL/SIGNAL ⟵15008

END

# FIG. 16

EP 4 554 109 A1

# FIG. 17

ASSOCIATING TCI STATE WITH RO INDEX — 17001

INDICATING TCI STATE #0 VIA UNIFIED TCI STATE FRAMEWORK (FOR EXAMPLE) — 17002

gNB — 110

UE — 105

TIME

MONITORING THE TRIGGERING CONDITIONS ASSOCIATED TCI STATE #0

UE APPLIES THE INDICATED PREFERRED TCI STATE #1 — 17004

t

| RO-1 ASSOCIATED WITH TCI STATE #1 | RO-3 ASSOCIATED WITH TCI STATE #3 |

| RO-0 ASSOCIATED WITH TCI STATE #0 | RO-2 ASSOCIATED WITH TCI STATE #3 |

UE SELECTS RO-1 TO TRANSMIT PRACH INDICATING THE PREFERENCE OF TCI-STATE #1 — 17003

| RO-1 ASSOCIATED WITH TCI STATE #1 | RO-3 ASSOCIATED WITH TCI STATE #3 |

| RO-0 ASSOCIATED WITH TCI STATE #0 | RO-2 ASSOCIATED WITH TCI STATE #3 |

EP 4 554 109 A1

# FIG. 18

18000

18001A — Receive configuration information including beam-quality assessment data for determining a quality of a current beam and/or a quality of a new beam

18001B — Receive configuration information comprising triggering-event data to determine that a condition is satisfied for performing a UEI-BM procedure

18002 — Based on determining that the condition is satisfied, send a beam report including information regarding the quality of the current beam and/or the quality of the new beam

# FIG. 19

19000

19001A — Receive configuration information including reporting data for reporing information about a quality of a current beam and/or a quality of a new beam

19001B — Receive configuration information comprising triggering-event data to determine that a condition is satisfied for performing a UEI-BM procedure

19002 — Based on determining that the condition is satisfied, send a beam report including information regarding the quality of the current beam and/or the quality of the new beam

FIG. 20

2000

**Program** 2040
- Operating System 2042
- Middleware 2044
- Application 2046

**Electronic Device** 2004

**Server** 2008

**Network** 2098 2099

**Electronic Device** 2002

2090 2092 2094

**Electronic Device** 2001

**Memory** 2030
- Volatile Memory 2032
- Non-Volatile Memory 2034
  - Internal Memory 2036
  - External Memory 2038

**Communication Module** 2090
- Wireless Communication Module
- Wired Communication Module

**Connecting Terminal** 2078

**Subscriber Identification Module** 2096

**Antenna Module** 2097

**Processor** 2020
- Main Processor 2021
- Auxiliary Processor 2023

**Sound Output Device** 2055

**Audio Module** 2070

**Interface** 2077

**Camera Module** 2080

**Battery** 2089

**Input Device** 2050

**Display Device** 2060

**Sensor Module** 2076

**Haptic Module** 2079

**Power Management Module** 2088

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/050139 A1 (QUALCOMM INC [US]; YUAN FANG [CN]; ZHOU YAN [US]; LUO TAO [US]) 6 April 2023 (2023-04-06) * paragraph [0054] - paragraph [0095] * * figures 3, 4 * | 1-15 | INV. H04B7/06 |
| X | WO 2023/077454 A1 (NEC CORP [JP]; WANG GANG [CN]) 11 May 2023 (2023-05-11) * paragraph [0071] - paragraph [0156] * * figure 2 * * tables 1, 2 * | 1-15 | |
| A | YOUNGBUM KIM ET AL: "On L1 enhancements for inter-cell beam management", 3GPP DRAFT; R1-2212068; TYPE DISCUSSION; NR_MOB_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, FR; 20221114 - 20221118 7 November 2022 (2022-11-07), XP052222633, Retrieved from the Internet: URL:https://www.3gpp.org/ftp/TSG_RAN/WG1_R L1/TSGR1_111/Docs/R1-2212068.zip R1-2212068 ICBM Enhancements Final.docx [retrieved on 2022-11-07] * the whole document * | 1-15 | **TECHNICAL FIELDS SEARCHED (IPC)** H04B |

The present search report has been drawn up for all claims

| Place of search | Date of completion of the search | Examiner |
|---|---|---|
| Munich | 12 March 2025 | Kokkinos, Titos |

EPO FORM 1503 03.82 (P04C01)

**ANNEX TO THE EUROPEAN SEARCH REPORT
ON EUROPEAN PATENT APPLICATION NO.**

EP 24 21 2329

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | | Publication date |
|---|---|---|---|---|
| WO 2023050139 A1 | 06-04-2023 | CN | 117999811 A | 07-05-2024 |
| | | EP | 4409955 A1 | 07-08-2024 |
| | | US | 2024298219 A1 | 05-09-2024 |
| | | WO | 2023050139 A1 | 06-04-2023 |
| WO 2023077454 A1 | 11-05-2023 | CN | 118216175 A | 18-06-2024 |
| | | EP | 4427482 A1 | 11-09-2024 |
| | | JP | 2024539380 A | 28-10-2024 |
| | | WO | 2023077454 A1 | 11-05-2023 |

EPO FORM P0459